(19) Europäisches Patentamt
European Patent Office
Office européen des brevets

(11) **EP 3 671 293 A1**

(12) **EUROPEAN PATENT APPLICATION**

(43) Date of publication:
**24.06.2020 Bulletin 2020/26**

(51) Int Cl.:
***G02B 5/18*** *(2006.01)*      ***G02B 27/00*** *(2006.01)*
***G02B 27/01*** *(2006.01)*

(21) Application number: **18215212.4**

(22) Date of filing: **21.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Thomson Licensing**
**35576 Cesson Sévigné Cédex (FR)**

(72) Inventors:
• **DRAZIC, Valter**
**35576 CESSON-SEVIGNE (FR)**

• **SHRAMKOVA, Oksana**
**35576 CESSON-SEVIGNE Cedex (FR)**

(74) Representative: **Vidon Brevets & Stratégie**
**16B, rue de Jouanet**
**BP 90333**
**35703 Rennes Cedex 7 (FR)**

Remarks:
A request for correction of the description has been filed pursuant to Rule 139 EPC. A decision on the request will be taken during the proceedings before the Examining Division (Guidelines for Examination in the EPO, A-V, 3.).

(54) **AN OPTICAL DEVICE COMPRISING AT LEAST ONE DIFFRACTION GRATING HAVING A GRATING PITCH ABOVE THE WAVELENGTH**

(57) An optical device and an eyeware apparatus comprising the optical device are disclosed. The optical device comprises at least one diffraction grating, wherein said at least one diffraction grating is configured to diffract a light of at least one given wavelength incident on said optical device, wherein said at least one diffraction grating has a grating pitch above said at least one given wavelength and wherein said at least one diffraction grating is configured to diffract said incident light at a diffraction order having an absolute value equal to or greater than 2, wherein the optical device is an optical waveguide configured for guiding said light diffracted at a diffraction order having an absolute value equal to or greater than 2.

FIG.6

**Description**

1. Technical field

The present disclosure relates to the field of optics and photonics, and more specifically to optical device comprising at least one diffraction grating. It may find applications in the field of conformable and wearable optics (i.e. AR/VR glasses (Augmented Reality/Virtual Reality)), as well as in a variety of other electronic consumer products comprising displays and/or lightweight imaging systems.

2. Background

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.
AR/VR glasses are considered as the next generation human-machine interface, thus raising significant interest of major industrial players in the domain of consumer electronics and mobile devices.
Development of AR/VR glasses (and more generally eyewear electronic devices) is associated with a number of challenges, including reduction of size and weight of such devices as well as improvement of the image quality (in terms of contrast, field of view, color depth, etc.) that should be realistic enough to enable a truly immersive user experience.
The tradeoff between the image quality and physical size of the optical components motivates research into ultra-compact optical components that can be used as building blocks for more complex optical systems, such as AR/VR glasses. Such optical components shall also be easy to fabricate and replicate.
In such AR/VR glasses, various types of refractive and diffractive lenses and beam-forming components are used to guide the light from a micro-display or a projector towards the human eye, allowing forming a virtual image that is superimposed with an image of the physical world seen with a naked eye (in case of AR glasses) or captured by a camera (in case of VR glasses).
Some of kind of AR/VR glasses utilizes optical waveguide wherein light propagates into the optical waveguide by TIR (for Total Internal Reflection) only over a limited range of internal angles. The FoV (for Field of View) of the waveguide depends on the material of the waveguide.

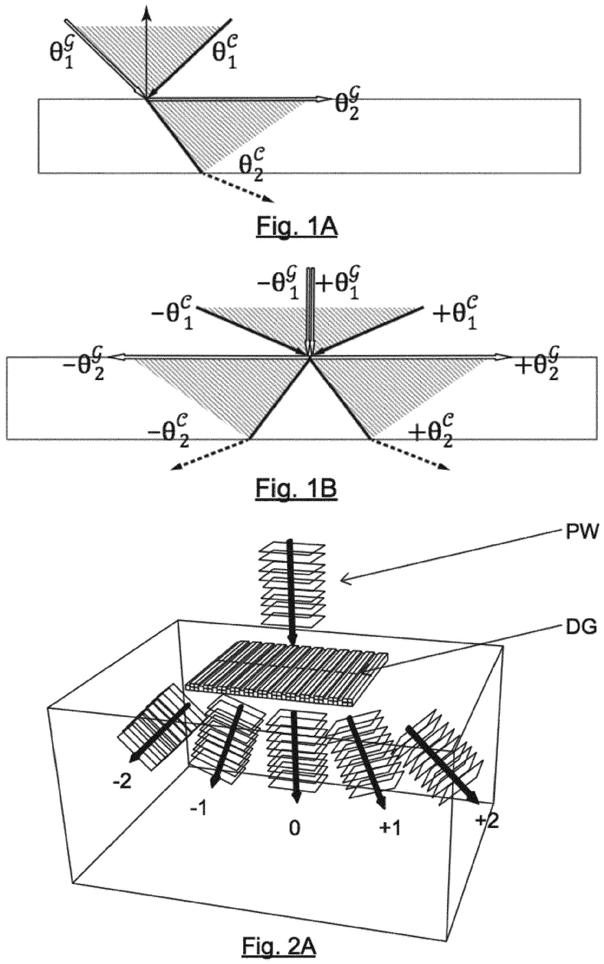

The FoV of a waveguide is defined as the maximum span of $\theta_1^+ - \theta_1^-$ which propagates into the waveguide by TIR. In general and as illustrated by figure 1A, the biggest angular span that can be coupled into the waveguide is defined by two rays: the ray critical ( $\theta_1^{\mathcal{C}}$ in figure 1A) having incident angle $\theta_1^{\mathcal{C}}$ and the grazing ray ( $\theta_1^{\mathcal{G}}$ in figure 1A) having incident angle $\theta_1^{\mathcal{G}}$. The critical ray is the light ray that just diffracts into the waveguide at the critical angle $\theta_2^{\mathcal{C}}$ defined by $\sin \theta_2^{\mathcal{C}} = \dfrac{1}{n_2(\lambda)}$ where $n_2$ is the refractive index of the waveguide's material and $\lambda$ the wavelength of the incident light. The grazing ray is the ray having an input angle that diffracts into the waveguide at grazing incidence $\theta_2^{\mathcal{G}} = 90^\circ$ The theoretical FoV of a waveguide presented above is for a single mode system where one single diffraction mode is used to carry the image: either +1 or -1 diffraction mode.
In WO2017180403, a waveguide with extended Field of View is proposed wherein a dual mode image propagation is used. In this method, they use the diffraction mode +1 to carry the right hand side image (negative angles of incidence on the incoupler) in one direction and the -1 mode to propagate the positive angles of incidence into the opposite direction into the waveguide. Such a system is illustrated by figure 1B wherein critical angle and grazing angle are shown for both diffraction modes. In WO2017180403, combining both half images is done thanks to the pupil expanders and out-couplers at the exit of the waveguide so that the user sees one single image. The benefit of the system is to double the Field of View since each half image can use the whole angular bandwidth of the waveguide in each direction of propagation.
However, such an optical waveguide and most optical waveguide comprise diffraction grating. The diffracting structure's period d (also known as grating pitch) of such diffraction grating depends on the wavelength $\lambda$ of the incident

light and on the refractive index $n_2$ of the material of the waveguide, and can be defined by $d = \frac{2 \times \lambda}{n_2 + 1}$ (Eq. 1)

If we consider the ratio between the grating's pitch and the wavelength: $d/\lambda$, in the case of equation 1 presented above, we can put that $3/2 < n_2 < 2$ and $2/3 < d/\lambda < 4/5$ and in any case $d/\lambda < 1$ a value that can be qualified as being sub-wavelength. Equation 1 in any case implies that the diffraction grating has a sub-wavelength structure. In US20160231568, a waveguide for eye glasses is disclosed wherein the grating's pitch of the structure is between 250 and 500nm.

This geometrical particularity makes the grating excessively difficult to fabricate. It is out of reach of photo lithographic techniques since the structure is sub-wavelength and the required precision challenges even electron-beam lithography technology.

Therefore, there is a need for improved optical waveguide comprising diffraction grating.

3. Summary

An optical device comprising at least one diffraction grating, wherein said at least one diffraction grating is configured to diffract a light of at least one given wavelength incident on said optical device, wherein said at least one diffraction grating has a grating pitch above said at least one given wavelength and wherein said at least one diffraction grating is configured to diffract said incident light at a diffraction order having an absolute value equal to or greater than 2, wherein the optical device is an optical waveguide configured for guiding said light diffracted at a diffraction order having an absolute value equal to or greater than 2.

Thus, according to the present disclosure, the diffraction grating is dedicated to a given wavelength or a group of given wavelengths. The diffraction grating is configured so that main part of incident light is diffracted at a diffraction order having an absolute value equal to or greater than 2. Using higher diffraction orders than in prior art systems, meaning |M| > 1, with M being the diffraction order, has the effect of multiplying the wavelength by the order which is used in the diffraction equation. As the grating pitch is directly a function of the product $M\lambda$, this means that the grating pitch is multiplied by M and the structures used for the in-coupler are much bigger. This opens up new possibilities in the fabrication technology, because nano-imprinting could be used. We also get less lines per mm for the grating density and the fabrication process can be optimized since the structures will no more be sub-wavelength but over-wavelength.

According to the present disclosure, $\frac{d}{\lambda} > 1$, with d being the grating's pitch and $\lambda$ the wavelength, the diffraction grating has thus over-wavelength structures which put less constrains on fabrication than sub-wavelength structures.

According to an embodiment of the disclosure, said at least one diffraction grating comprises a base pattern comprising at least one dielectric material, said base pattern being configured to form a nanojet beam associated with edges of the base pattern from said light incident on said at least one diffraction grating.

Advantageously, according to this embodiment of the present disclosure, nanojet beam forming phenomenon is exploited for transferring energy of main part of incident light into second order diffraction beams. The use of a base pattern configured to form nanojet beams from the edges of the base pattern allows to provide high diffraction efficiency while at the same time providing high diffraction uniformity.

Prior art system do not work with higher order diffraction because configuration of prior art system provides diffraction efficiency close to 0. The use of a base pattern configured to form nanojet beams allows to achieve high diffraction efficiency, the diffraction uniformity is average and at least equal to what prior art systems produce with lower diffraction orders.

According to another embodiment of the disclosure, said at least one diffraction grating comprises at least one dielectric material with refractive index $n_2$ deposited on a substrate with refractive index $n_3$, and $n_3 < n_2$.

According to another embodiment of the disclosure, said base pattern of said at least one diffraction grating is configured according to at least any one of the following arrangements:

- said base pattern comprises a block of a same dielectric material with refractive index $n_3$ as said substrate, on top of said substrate, said block of a same dielectric material with refractive index $n_3$ being inserted into one block of said dielectric material with refractive index $n_2$, or,
- said base pattern comprises a block of same dielectric material with refractive index $n_3$ as said substrate, on top of said substrate, said block of a same dielectric material with refractive index $n_3$ being placed between two blocks of dielectric material with refractive index $n_2$, said block of dielectric material with refractive index $n_3$ and said two blocks of dielectric material with refractive index $n_2$ having identical height, or
- said base pattern comprises two blocks of dielectric material with refractive index $n_2$ having identical dimensions, on top of said substrate, said two blocks being placed at a determined distance, or,

- said base pattern comprises one block of said dielectric material with refractive index $n_2$ on top of said substrate, said block having a U shape.

According to another embodiment of the disclosure, when said base pattern comprises two blocks of dielectric material with refractive index $n_2$ having identical dimensions, on top of said substrate, said two blocks being placed at a determined distance $W_1$, said two blocks have a height $H_2$ with $H_2 \geq \frac{W_2}{\tan \theta'_{B1}}$ and $H_2 < \frac{W_2}{\tan \theta''_{B1}}$ with $W_2$ being the width of each of the two blocks and $\theta'_{B1}$ and $\theta''_{B1}$ being respective angles of nanojet beams radiation associated with edges of the base pattern from said light incident on said at least one diffraction grating, wherein $\theta'_{B1} \approx \theta_{B1} - \frac{\theta_i}{2}$, $\theta''_{B1} \approx \theta_{B1} + \frac{\theta_i}{2}$ with $\theta_i$ being the angle of the incident light with respect to a normal to the top surface of said diffraction grating and $\theta_{B1} \approx \frac{90° - \sin^{-1}\left(\frac{n_1}{n_2}\right)}{2}$, $n_1$ being the refractive index of host medium in which the diffraction grating is placed.

According to another embodiment of the disclosure, when said base pattern comprises one block of said dielectric material with refractive index $n_2$ on top of said substrate, having a U shape, said U-shape consisting in two blocks of height $H_2$ and width $W_2$ separated by a central block of height $H_1$, with $H_1$ lower than $H_2$, and $H_2 - H_1 \geq \frac{W_2}{\tan \theta'_{B1}}$ with $\theta'_{B1} \approx \theta_{B1} - \frac{\theta_i}{2}$ with $\theta_i$ being the angle of the incident light with respect to a normal to the top surface of said diffraction grating and $\theta_{B1} \approx \frac{90° - \sin^{-1}\left(\frac{n_1}{n_2}\right)}{2}$, $n_1$ being the refractive index of host medium in which the diffraction grating is placed.

According to another embodiment of the disclosure, $W_1$ being said determined distance or a width of said central block, and $W_2$ being the width of each of said two blocks or of each of said two lobes, $W_1$ and $W_2$ depend on a grating pitch d of said diffraction grating with $W_1 < \frac{d}{3}$ and $W_1 + W_2 \neq \frac{d}{2}$.

According to another embodiment of the disclosure, said base pattern has a symmetric geometry. According to this embodiment, the optical device can be used in dual mode. For instance, it can be implemented in a waveguide which separates right hand side and left hand side of an input image to double the Field of View of the waveguide.

According to another embodiment of the disclosure, said base pattern has an asymmetric geometry. According to this embodiment, the optical device is designd for single mode diffraction, for instance for in-coupler that just deviates the image into a signel side of a waveguide. This embodiment allows to have even bigger grating's pitch.

According to another embodiment of the disclosure, said at least one diffraction grating is configured to diffract light for a group of wavelengths comprising more than one wavelength, and wherein said grating pitch is above the highest wavelength of said group of wavelengths.

According to another embodiment of the disclosure, the optical device according to any one of the embodiments disclosed above comprises one diffraction grating per Red, Green and Blue color.

According to another embodiment of the disclosure, the optical device is an optical waveguide. The optical device can advantageously be used as a waveguide, for instance a waveguide for AR/VR glasses.

According to another embodiment of the disclosure, said at least one diffraction grating is configured for in-coupling light incoming into said optical waveguide or for extracting light out of said optical waveguide.

According to another embodiment of the disclosure, said at least one diffraction grating is configured for in-coupling light incoming into said optical waveguide and wherein said optical waveguide comprises another diffraction grating configured for extracting light out of said optical waveguide, said other diffraction grating having a grating pitch above a wavelength of said light and said other diffraction grating being configured to diffract said light at a diffraction order having an absolute value equal to or greater than 2.

According to another aspect of the present disclosure, an eyewear apparatus is disclosed. Such an eyewear apparatus comprises at least one optical device according to any one of the embodiments discsussed above.

According to an embodiment of the disclosure, the eyewear apparatus comprises:

- a light display engine configured for emitting an image to display,
- a group of optics configured for coupling incoming light from the light display engine to said optical waveguide,
- said at least one optical waveguide being configured for guiding incoming light towards an eye of a user to make the image visible to the user.

4. Brief description of the drawings

The present disclosure can be better understood with reference to the following description and drawings, given by way of example and not limiting the scope of protection, and in which:

- Figure 1A illustrates the definition of theoretical critical and grazing rays in single mode,
- Figure 1B illustrates the definition of theoretical critical and grazing rays in dual mode,
- Figure 2 illustrates diffraction modes of an incident plane wave,
- Figure 3 illustrates the definition of important rays for the negative angular input space,
- Figures 4A and 4B illustrate an exemplary 60° field of view light engine.
- Figure 5 illustrate a schematic view of the Light engine from figures 4A and 4B with the waveguide provided with the in-coupling grating.
- Figure 6 illustrates an examplary Geometry and pitch size for a base pattern of the diffraction grating.
- Figure 7 illustrates diffraction performances of a grating structure illustrated with figure 6.
- Figure 8 illustrates diffraction performances of a grating structure illustrated with figure 6, but without the high index material.
- Figure 9 illustrates (a) a Cross-section view of a double-material metaelement with an insert as illustrated with figure 6; (b) Power density distribution in the xy-plane for the metaelement with the parameters: $n_1$ = 1.0, $n_2$ = 2.105, $W_1$ = 260nm, $W_2$ =100nm, H=700nm, $H_2$ =300nm. $\lambda$=625nm, $\theta_i$ =0°.
- Figure 10 illustrates (a) a Cross-section view of a double-material metaelement with an insert as illustrated with figure 6; (b) Power density distribution in the xy-plane for the metaelement with the parameters: $n_1$ = 1.0, $n_2$ = 2.105, $W_1$ = 260nm, $W_2$ =100nm, H=700nm, $H_2$ =300nm. $\lambda$=625nm, $\theta_i$ =30°.
- Figure 11 illustrates (a) Hy component distribution and (b) power density distribution in the xy-plane for the metaelement illustrated with figure 6 with the parameters: $n_1$ = 1.0, $n_2$ = 2.105, $n_3$ = 1.52, $W_1$ = 260nm, $W_2$ = 100nm, H = 700nm, $H_2$ = 300nm. $\lambda$ = 625nm.
- Figure 12 illustrates an exemplary geometry and pitch size for an alternative embodi ment of a base pattern of a diffraction grating.
- Figure 13 illustraes performance of a grating based on the geometry illustrated with figure 12.
- Figure 14A illustrates a cross-section view of a double-material metaelement with equal height insert (left part) and power density distributions in the xy-plane for the metaelement (right part) with the parameters: $n_1$ = 1.0, $n_2$ = 2.105, $n_3$ = 1.52, $W_1$ =260nm, $W_2$ =130nm, H=305nm, $H_2$ =300nm, $\lambda$=625nm and $\theta_i$ =0°.
- Figure 14B illustrates a cross-section view of a double-material metaelement with equal height insert (left part) and power density distributions in the xy-plane for the metaelement (right part) with the parameters: $n_1$ = 1.0, $n_2$ = 2.105, $n_3$ = 1.52, $W_1$ =260nm, $W_2$ =130nm, H=305nm, $H_2$ =300nm, $\lambda$=625nm and $\theta_i$ =30°.
- Figure 15 illutrates (a) Hy component distribution and (b) power density distribution in the xy-plane for the metaelement illustrated with figure 12 with the parameters: $n_1$ = 1.0, $n_2$ = 2.105, $n_3$ = 1.52, $W_1$ = 260nm, $W_2$ = 130nm, H = 305nm, $H_2$ = 300nm, $\lambda$ = 625nm.
- Figure 16 illustrates another exemplary geometry for a base pattern of a diffraction grating according to an embodiment of the present disclosure.
- Figure 17 illustrates performances of the structure illustrated with figure 16.
- Figure 18 illustrates an exemplary regular structure of a diffraction grating according to prior art.
- Figure 19 illustrates diffraction efficiencies for the structure illustrated with figure 18.
- Figure 20 illustrates cross-section views of a single-material metaelements illustrated with figure 16 (left part) and with figure 18 (right part) with the parameters: $n_1$ = 1.0, $n_2$ = 2.105, $W_1$ =260nm, $W_2$ =130nm, H=200nm, $\theta_i$ =0°.
- Figure 21 illustrates cross-section views of a single-material metaelements illustrated with figure 16 (left part) and with figure 18 (right part) with the parameters: $n_1$ = 1.0, $n_2$ = 2.105, $W_1$ =260nm, $W_2$ =130nm, H=200nm, $\theta_i$ =30°.
- Figure 22A illustrates (a) Hy component distribution and (b) power density distribution in the xy-plane for the single NJ element illustrated with figure 18 with the parameters: $n_1$ = 1.0, $n_2$ = 2.105, $n_3$ = 1.52, $W_1$ = 260nm, $W_2$ = 130nm, $H_2$ = 200nm, $\lambda$ = 625nm.
- Figure 22B illustrates (c) Hy component distribution and (d) power density distribution in the xy-plane for the twin structure metaelement illustrated with figure 16 with the parameters: $n_1$ = 1.0, $n_2$ = 2.105, $n_3$ = 1.52, $W_1$ = 260nm, $W_2$ = 130nm, $H_2$ = 200nm, $\lambda$ = 625nm.
- Figure 23 illustrates power density distribution in the xy-plane for the twin structure metaelement illustrated with figure 16 with the parameters: $n_1$ = 1.0, $n_2$=2.105, $W_1$ = 260nm, $W_2$ = 130nm, $H_2$ = 200nm, $\lambda$ = 625nm; Left column - $n_3$ = 2.105, right column - $n_3$ = 1.52.

- Figure 24 illustrates another exemplary geometry for a base pattern of a diffraction grating according to an embodiment of the present disclosure.
- Figure 25 illustrates performance of the U shaped structure illustrated with figure 24.
- Figure 26 illustrates (a) Hy component distribution and (b) power density distribution in the xy-plane for the U-shaped metaelement illustrated with figure 24 with the parameters: $n_1$ = 1.0, $n_2$ = 2.105, $n_3$ = 1.52, $W_1$ = 260nm, $W_2$ = 130nm, $H_2$ = 200nm, $H_1$ = 50nm, $\lambda$ = 625nm.
- Figure 27 illustrates tolerancing of the pitch size d = 823 $\pm$ 5nm. for the U shaped structure illustrated with figure 24: top part shows the performances for d = 818nm.
- Figure 28 illustrates an exemplary geometry and pitch size for another embodiment of the base pattern of the diffraction grating.
- Figure 29 illustrates performance of geometry illustrated with figure 28, the horizontal axis spans $\pm$12 degrees.
- Figure 30 illustrates a perspective schematic view of an eyewear apparatus according to an embodiment of the present disclosure,
- Figure 31 illustrates a schematic front view of the eyewear apparatus illustrated with figure 30,
- Figure 32 illustrates an exemplary diffraction grating according to an embodiment of the present disclosure.

## 5. Description of embodiments

According to the present principle, an optical device comprising at least one diffraction grating will be described. According to embodiments of the present disclosure, such an optical device can be used as a waveguide for AR/VR glasses for instance.

According to the present disclosure, the optical device presents a specific diffraction grating that can be used for in coupling light into the optical device and /or out coupling light from the optical device. According to the present principle, the diffraction grating is configured to diffract an incident light at a diffraction order having an absolute value equal to or greater than 2.

### 5.1 Diffraction modes

Figure 2 shows schematically what happens to a plane wave (PW) incident upon a linear grating (DG). The plane wave gets divided into diffraction modes (-2, -1, 0, +1, +2), which are angular spaced beams of local maximum intensity. In the figure 2, the diffracted modes number -2,-1,0, 1 and 2 are represented but higher orders exist. The order zero has in general the more power and is the natural mode into which the regular refraction or reflection would occur. We might also have diffracted modes in reflection.

In general, a grating generates a lot of diffraction orders. In numerous applications it is wishful to kill all other modes but the first one. An example of such gratings are thick holograms made by the interference of two plane waves.

It is then the aim of the structure of the diffraction grating to privilege heavily on the first diffraction order and kill as much as possible of the remaining ones.

All diffraction orders are linked to the incoming beam by the following mathematical formula:

$$n_2(\lambda) \sin \theta_2 - n_1(\lambda) \sin \theta_1 = M\lambda T.$$

where $n_1(\lambda)$ and $n_2(\lambda)$ are the index of refraction of the incident and diffracted media respectively. In most cases $n_1(\lambda)$ = 1. Then $\theta_1$ is the incident angle, $\theta_2$ the diffracted angle, M is the diffraction order, $\lambda$ the wavelength and T the grating frequency, which is expressed in lines per $\mu$m if the wavelength is also expressed in $\mu$m. For the diffraction order M = 0, this formula reduces to the well known Snell-Descartes's law of refraction. This equation should also be taken with a lot of criticism as it does not account for different phenomenons. Depending on the polarization of the input beam and geometry of the elementary structure used to build up the array, not to speak about the materials used, there could be missing modes. This equation does not account for the energy redistribution by the elementary structures.

### 5.2 Design wavelengths

Usually, the light engine consists in light sources and one display. The light sources are power LED that are time sequentially driven and the design of the flat optics shall be adapted to the wavelengths of the LEDs. Example of common LEDs for near to eye projection are: Blue 459nm True Green 530nm Red 625nm The diffraction process is very dispersive. The diffraction angle is different for different wavelength as it varies linearly with the wavelength ($M\lambda T$)

which is quite a big variation. It is therefore necessary to find a mean to minimize chromatic aberrations. One way of handling this is to have one waveguide per color band as the diffraction grating needs to be different for each one. So if we are dealing with an RGB true color image, we would need to have three waveguides. This complicates their design.

5.3 Over-wavelength in-coupling grating design

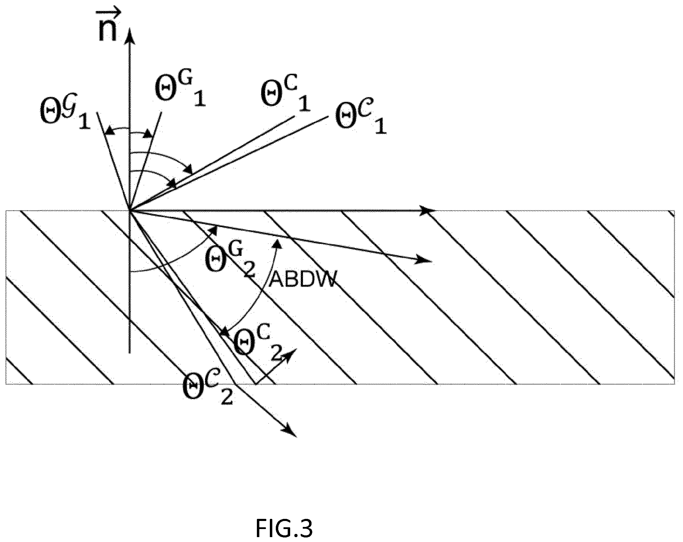

Figure 3 shows the definition of some important rays used to characterize a waveguide. Capital superscript letters $\mathcal{G}$ and $\mathcal{C}$ indicate respectively the grazing and critical rays. If the subscript is 1, the rays are outside of the waveguide, if it is 2, they are inside. In principle, the maximal input angular bandwidth of the grating from the figure is $\left[\theta_1^{\mathcal{C}}, \theta_1^{\mathcal{G}}\right]$ and the maximal waveguides angular bandwidth is $\left[\theta_2^{\mathcal{C}}, \theta_2^{\mathcal{G}}\right]$. This being said, the ray $\theta_2^{\mathcal{G}}$ is not a wishful option, as it is not possible to extract that ray. Hence, in practice, the angular bandwidth inside of the waveguide will be limited to $\left[\theta_2^{\mathcal{C}}, \theta_2^{\mathcal{G}}\right] \subset \left[\theta_2^{\mathcal{C}}, \theta_2^{\mathcal{G}}\right]$, (the angular sector indicated by ABDW on figure 3) which correspond to the input angular range $\left[\theta_1^{\mathcal{C}}, \theta_1^{\mathcal{G}}\right] \subset \left[\theta_1^{\mathcal{C}}, \theta_1^{\mathcal{G}}\right]$. Concerning angular sign convention, the positive angle measure is oriented in the trigonometrical direction, which means that $\theta_1^{\mathcal{G}} > 0$ and all other $\theta_1^x < 0$ on the figure. Another convention: the diffracted rays on the figure have all positive values and the diffraction mode is a positive one, M > 0. If we apply the diffraction equation to the set of rays, we get the 4 following ones:

$$n_2 - n_1 \times \sin(\theta_1^{\mathcal{G}}) = \frac{M \times \lambda}{d} \text{ (Eq. 2)}$$

$$1 - n_1 \times \sin(\theta_1^{\mathcal{C}}) = \frac{M \times \lambda}{d}$$

$$n_2 \times \sin(\theta_2^{\mathcal{G}}) - n_1 \times \sin(\theta_1^{\mathcal{G}}) = \frac{M \times \lambda}{d} \text{ (Eq. 3)}$$

$$n_2 \times \sin(\theta_2^{\mathcal{C}}) - n_1 \times \sin(\theta_1^{\mathcal{C}}) = \frac{M \times \lambda}{d}$$

The problem to solve now is to choose the grating's period *d* which can diffract the rays as illustrated in figure 3. We have to make some choices, particularly concerning the ray $\theta_2^{\mathcal{G}}$ inside of the waveguide. What is a reasonable angle ? This will be given by the distance the image has to travel into the waveguide before being extracted, the number of TIR bounces and thickness of the waveguide.

Let's say we need to extract the image approximately 4cm from the injection into the waveguide, this is the distance between the exit pupil of the light engine in the branches of glasses and the eye. Then we also suppose that the light engine and the eye are in the same half space with respect to the waveguide, this means that the extraction port is an even number. If we denote $x_i^{C,G}$ the distance from an input of a critical ray or grazing ray before he bounce number i, i is called the extraction port. If i is even, the extraction port is on the same side than the light engine and if i is odd the extraction port is on the opposite side of the light engine. A way of using practically this definition of extraction port is to set a diffraction grating between the points [$x_2^C$, $x_2^G$] whose result would be to gather the image out of the waveguide by diffraction between those two points. The image is said to be extracted at port number 2.

We also want a field of view of 24 degrees for a glass substrate of index 1.5. We can define in the next table, some values useful for the design of a system.

Table 1: Parameters for the design of the grating

|  | Inputs | Calculated |
|---|---|---|
| index $n_2$ | 1.52 |  |
| Light engine field of View $\Delta\phi°$ | 24 |  |
| Waveguide's field of View $\Delta\theta°$ |  | 30.14 |

(continued)

| | Inputs | Calculated |
|---|---|---|
| critical ray angle inside of the waveguide $\theta_2^C$ (0)° | | 43.80 |
| grazing ray angle inside of the waveguide $\theta_?^G$ (0)° | | 74.96 |
| Length incoupling grating L (mm) | 4.2 | |
| minimal thickness of glass plate for light engine's field of view (mm) | | 2.190 |
| minimal thickness of glass plate for waveguide's field of view (mm) | | 2.404 |
| Thickness of prototype t (mm) | 2.4 | |
| Extraction port number k | 6 | |
| Beginning of the extraction port $x_k^C$ (0) (mm) | | 13.810 |
| End of the extraction port $x_k^G$ (L) (mm) | | 57.781 |
| Extraction port length $L_k$ (mm) | | 43.971 |

In this typical system we see that a more reasonable value for the grazing angle in the waveguide could be chosen to be approx. $\theta_2^G = 74.96°$. But we can also choose $\theta_1^C$. Indeed we would like to design a diffraction grating that diffracts all negative $\theta_1$ angles into a positive diffraction mode ($\theta_2 > 0$), and diffracting all positive input angles into a negative diffraction mode ($\theta_2 < 0$).

In this way, we will be in the prior art condition discussed above which splits half of the field of view (i.e. half of the image) into one direction and the other half into another direction with the positive consequence to double the field of view. This means that $\theta_1^G$ needs to be chosen with the same angle sign than $\theta_1^C$ and in the vicinity of the normal.

But there is another important condition here. There should be no cross-talks between the positive and negative order, which means that for a given orientation hitting the in-coupler, there shall always be one and only one direction of diffraction and no energy into the other one. On figure 3, this condition will be met if $\theta_1^G \leq 0$ and in order not to loose too much on resolution, let us choose $\theta_1^G = 0$. From the equation Eq.2 discussed above, the gratings pitch can be obtained as: $d = \frac{M \times \lambda}{n_2}$ (Eq.4). (eq.4). Finally, what is the angle $\theta_1^G$ that diffracts into the direction $\theta_2^G \approx 75°$? By using the equation Eq. 3 discussed above, we find that: $\sin(\theta_1^G) = n_2 \times [\sin(\theta_2^G) - 1]$.

The maximal angular span of the input beam for negative angles is $[\theta_1^C, \theta_1^G]$ which couples into the waveguide to span the angular bandwidth of $[\theta_2^C, \theta_2^G]$.

Let us analyze the relationship between pitch size and wavelength from both equations Eq.1 and Eq. 4.

For $n_2 \in [3/2, 2]$, and if we choose to work with second diffraction order, |M| = 2, then the structural relationship is $d/\lambda \geq 1$ in any case, which means that we are in another dimension when compared to the wavelength. The structure will then be over- wavelength.

If, instead of coupling the first diffraction order into the waveguide, we choose the grating's pitch so that we couple a higher order, the grating's pitch will be greater and we could avoid to be on the very limits of the micro fabrication processes.

The table 2 shows the difference between a grating designed to couple second orders and a grating for first orders. The difference in pitch size is almost doubled. For the second diffraction orders, we get for the RGB in-couplers values of the pitch $d_{625}$ = 822.4nm, $d_{530}$ = 697.4nm, $d_{460}$ = 605.3nm instead of the very small pitch sizes that are obtained for the first diffraction orders: $d_{625}$ = 411.2nm, $d_{530}$ = 348.7nm, $d_{460}$ = 302.7nm.

This is the reason those gratings (using second diffraction order) are called over-wavelength gratings as their pitch is always bigger than the wavelength of the color band they are designed for. On the other hand, the grating (using first diffraction order) can be called subwavelength gratings since their pitch is smaller than the wavelength of the color band they are designed for.

The field of view from the table 2 is given for a system that uses both $\pm 2$ diffraction orders. It is twice the field of view of previous systems working in only one direction into the waveguide.

In general there is a reason why people work with orders $\pm 1$! It is because it is possible to get a symmetric response curve into both directions for the very lower diffraction orders, while emphasizing either order +1 or order -1 with very high diffraction efficiency but also with enormous diffraction uniformity.

As we will discuss below, the nanojet based diffraction gratings disclosed herein allows to get symmetric response into $\pm 2$ diffraction orders with also very high diffraction uniformity, which is a real strength.

Table 2: Grating's pitch and angular bandwith

| | 1.52 | 1.52 | 1.52 |
|---|---|---|---|
| Index $n_2$ | 1.52 | 1.52 | 1.52 |
| Diffraction order M | 2 | 2 | 2 |
| Wavelength $\lambda$ (nm) | 625 | 530 | 460 |
| $\theta_1^G$ (°) | -2.97 | -2.97 | -2.97 |
| grazing ray angle inside of the waveguide $\theta_2^G(\theta_1^G)$ (°) | 75 | 75 | 75 |
| Grating's period for 2nd order (nm) | 822.4 | 697.4 | 605.3 |
| Grating's period for 1st order (nm) | 411.2 | 348.7 | 302.7 |
| grazing incident angle for the real grazing ray in waveguide $\theta_1^G$ ( $\theta_2^G =$ 90°) | 0.00 | 0.00 | 0.00 |
| maximum input angle $\theta_1^C$ for diffraction order M | -31.33 | -31.33 | -31.33 |
| FoV | 56.73 | 56.73 | 56.73 |

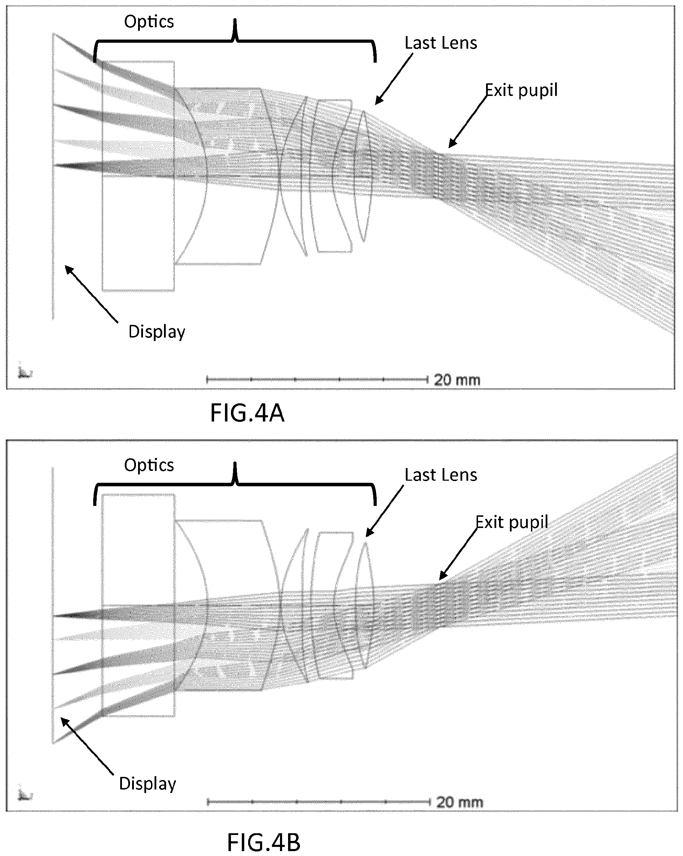

Figures 4A and 4B illustrates an exemplary schematic light engine providing a 60° field of view. The light engine comprises a display emitting incoming light to a set of optics that couple incoming light to an exit pupil placed at the last surface after the last lens of the set of optics, where the rays intersect into the smallest circular cross section.

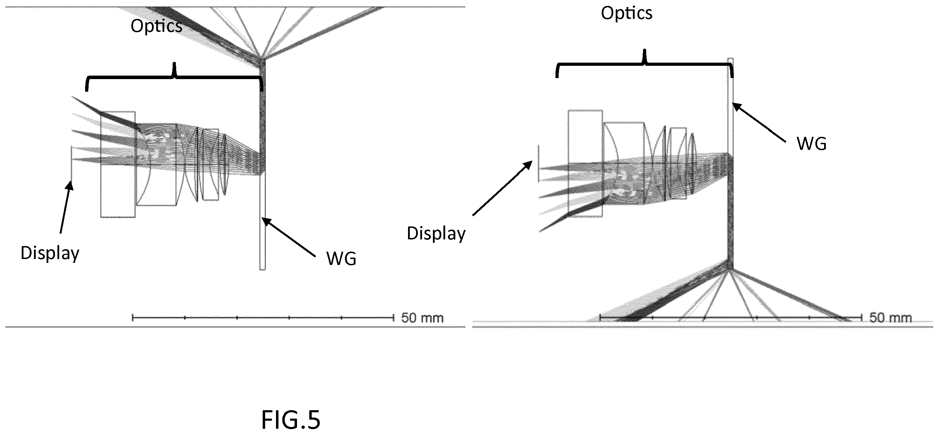

As will be seen in the figure 5, the diffraction grating is to be placed there. On figure 4A, we can see only rays of negative incident angle onto the in-coupling grating (exit pupil). Those rays come from the upper part of the display. On figure 4B, we can see only rays of positive incident angle onto the in-coupling grating (exit pupil). Those rays come from the lower part of the display.

Figure 5 shows the light engine from figures 4A and 4B with the waveguide (WG) provided with the in-coupling grating. Order M = 2 is on the left hand side, order M = -2 on the right hand side. Both ray paths exist at the same time if the display is ON. There is a $\pm 2.97°$ angular range along the center horizontal part of the display that does not contibute. This part of the display shall always be black.

Figure 5 is a schematic view of the light engine obtained from simulation. Only incoupling of incoming light into the waveguide is shown. On the simulated view, light rays are not extracted at output using extraction ports.

5.2 Nanojet based geometrical elements for dual-mode and 2nd order diffraction gratings

In all following subsections, different geometries will be presented that achieve high performances for the new principle presented here.

Different embodiments of geometry for a diffraction grating will be presented below, as well as the performances of such geometries. Also, a set of equations is presented to demonstrate the input from the edge diffraction phenomenon disclosed in "Near field focusing by edge diffraction", a. Boriskin, V. Drazic, R. keating, M. Damghanian, O. Shramkova, L. Blonde, Optics Letters, vol. 43, Issue 16, pp 4053-4056 (2018) in the single element of the period into the total response of the diffraction grating.

The presented data were obtained using the COMSOL Multiphysics software. The presented analysis of the fields and power distributions inside the so-called metaelements of the gratings helps us to explain the physics of the phenomenon and to get optimal topologies. We assume that the system is illuminated by a linearly-polarized plane wave E = {0, 0, 1} (TE). The effect of the parameters of the single metaelement on the functionality of the system is considered. As it was demonstrated in the document cited above, the nanojet (NJ) beam-forming phenomenon is associated solely with the edge of the system. Based on the analysis of the wedge diffraction phenomenon as disclosed in Near field focusing by edge diffraction", a. Boriskin, V. Drazic, R. keating, M. Damghanian, O. Shramkova, L. Blondé, Optics Letters, vol. 43, Issue 16, pp 4053-4056 (2018*),* we can determine the deviation angle of nanojet (NJ) beam in the denser medium in the case of normal incidence of electromagnetic wave ($\theta_i$ = 90°).

$$\theta_{NJ} \approx \frac{90° - \sin^{-1}\left(\frac{n_L}{n_H}\right)}{2} \quad \text{Eq. 5}$$

where $n_L$ is the refractive index of host medium, $n_H$ is the refractive index of higher index material, according to an embodiment of the present disclosure.

In the case of single wedge of single material element, the constructive interference phenomenon between jet wave generated by the wedge and plane waves refracted by the edges of this wedge leads to the creation of NJ beam.

It shall be also noted that in the following, unless specified otherwise, $n_1$ is the refractive index of host medium, $n_2$ represents the refractive index of the high index material while $n_3$ represents a lower refractive index, most of the time the glass substrate's index.

5.2.1 Dual material solution with insert

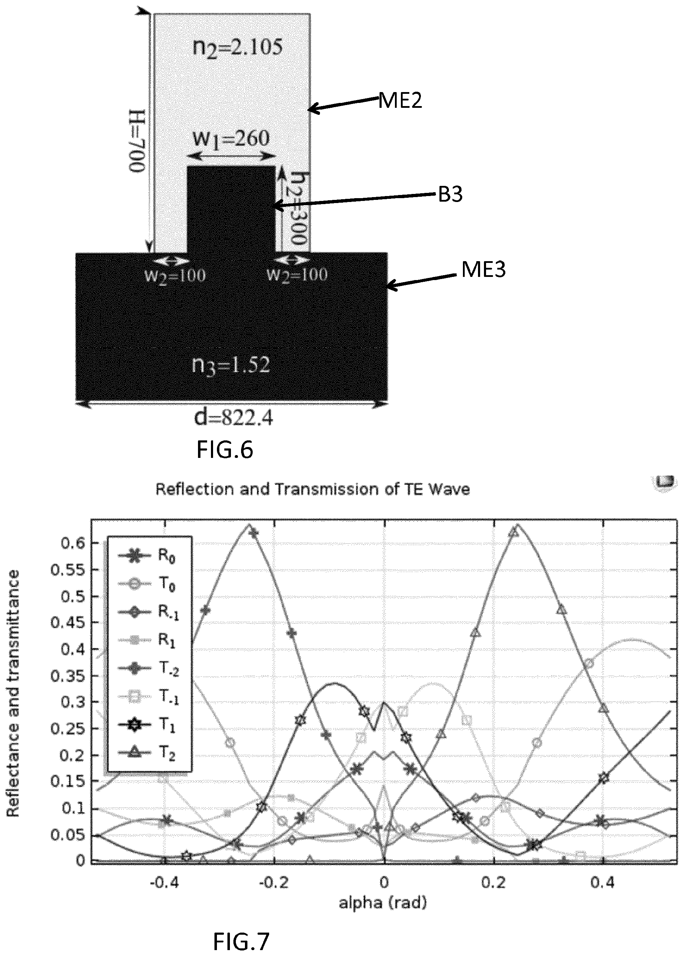

An exemplary geometry for a base pattern of a diffraction grating configured to diffract light at a diffraction order having an absolute value equal to or greater than 2 is disclosed in figure 6.

In figure 6, the base pattern comprises two dieletric materials: a block ME2 of dielectric material with refractive index $n_2$ placed on top of a layer ME3 of dieletric material with refractive index $n_3$. The layer ME3 presents a block B3 of same dielectric material, the block B3 is inserted in block ME2.

The structure from figure 6 has been optimized in order to deliver the best performances for the red wavelength at $\lambda$ = 625nm. Other slightly varying parameters could be used for a variable aspect of the diffraction curves. This structure is symmetrical, as it needs to feed a positive and a negative diffraction order in a symmetric way.

In order to fabricate the structure, a glass etching is first needed to generate the first structure (layer ME3) into the waveguide's base material. Then an ebeam lithography resist in spin coated on top of the structure and again exposed and etched to add the second component (ME2 block).

Both ME2 and ME3 components are dielectric transparent materials. This structure, as can be seen from the dimensions ilustrated on figure 6, has a much bigger pitch than in the prior art: 822.4nm instead of 496nm. The aspect ratio is of 700/460 ≈ 1.5 which is a low one, the depth is not much bigger than the width.

Figure 7 illustrates the diffraction performances of the grating illustrated on figure 6. WE can see from figure 7 that $n_{max} \approx 65\%$, $\Gamma \approx 1 - \frac{65-15}{65+15} \approx 37\%$, for a field of view of 2 × (30 - 3) = 54°. There is absolutely no cross-talk between orders +2 and -2 per design. It shall be avoided at this design phase to have some angles which diffract into both +2 and -2 orders. Order 0,+1 and -1 do not couple into the waveguide, they transmit through and will not reduce the virtual image contrast.

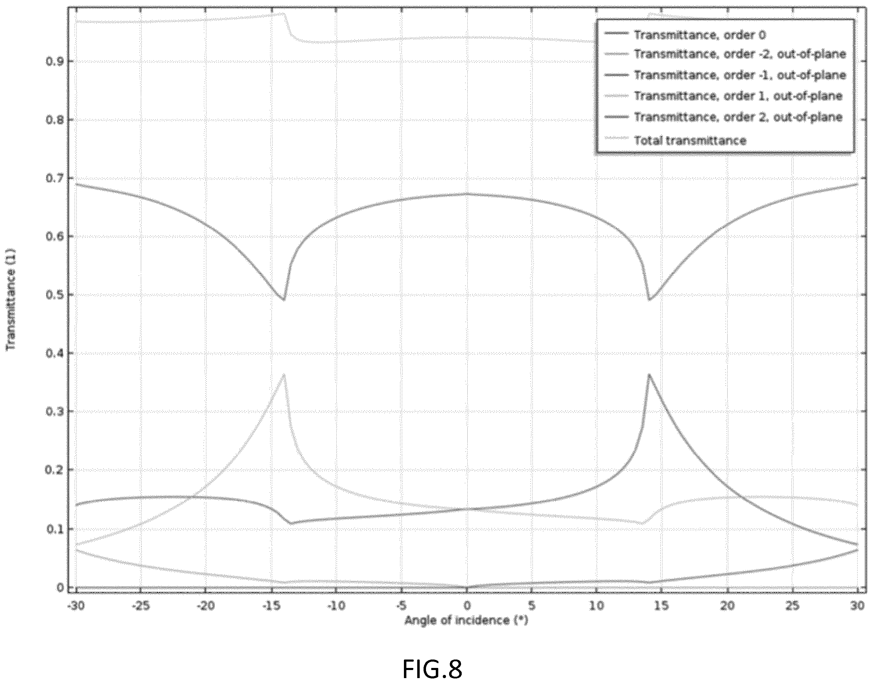

Considering figure 7, we can see from the analysis that the diffraction uniformity is of the same order than the prior art systems, but we use here second order diffraction while the prior art systems use first order. We have not kept in this system the very high uniformity we were able to achieve with nanojet enhanced diffraction grating of lower order, but we were able to get a very high diffraction efficiency like it is emphasized in figure 8 (discussed below) where we plot the diffraction efficiency of the same system but without nanojet enhancement (we removed the high index material to keep only the etched waveguide).

Figure 8 illustrates the diffraction performances of the grating structure of figure 6 but without the high index material (ME2). As can be seen on figure 8, the diffraction efficiency of +2 and -2 orders in that case are marginal.

We discuss now the nanojet analysis of the energy transfer to higher orders

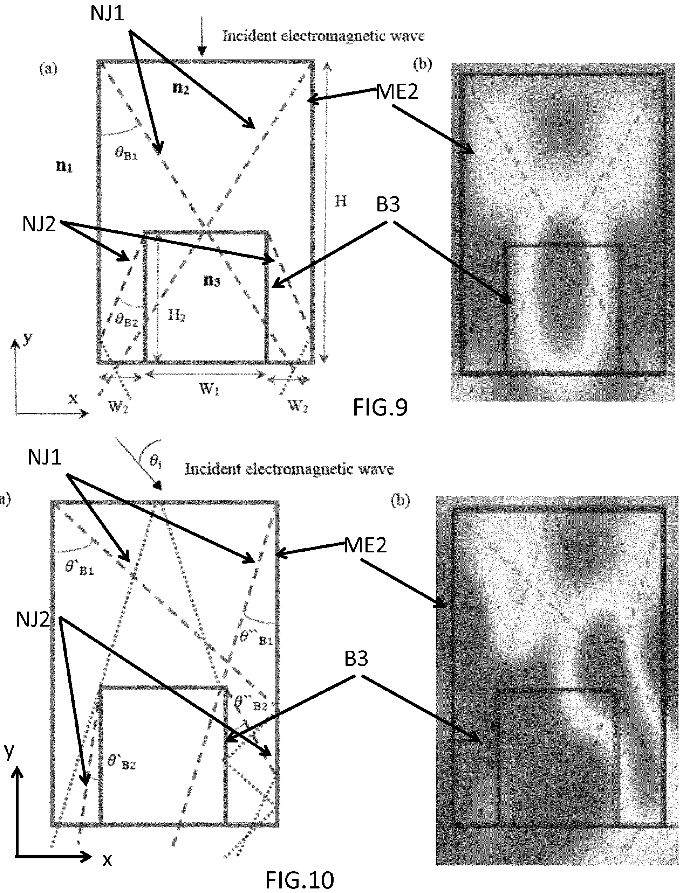

Figure 9 illustrates (a) a cross-section view of a double-material metaelement with the insert as illustrated in figure 6 for instance, and (b) the power density distribution in the xy-plane for such a metaelement with the parameters: $n_1$ = 1.0, $n_2$ = 2.105, $W_1$ = 260nm, $W_2$ =100nm, H=700nm, $H_2$ =300nm. $\lambda$=625nm, $\theta_i$ =0°.

Let us consider the symmetrical metaelement combining the dielectric block with refractive index $n_3$, width $W_1$

and height $H_2$ inside the dielectric block with the refractive index $n_2$, width $2W_2 + W_1$ and total height H (as illustrated in figure 9). We assume that $n_1$ is the refractive index of host medium and $n_1 < n_2 < n_3$. As a result, in the proposed system for $\theta_i = 0°$ ($\theta_i$ is the angle of incidence) we will observe radiation of 4 nanojets with deviation angle

$$\theta_{B1} \approx \frac{90° - \sin^{-1}\left(\frac{n_1}{n_2}\right)}{2}, \theta_{B2} \approx \frac{90° - \sin^{-1}\left(\frac{n_3}{n_2}\right)}{2}$$

For the proposed symmetrical system two opposite edges of the big block (ME3 in the Figure 9 will generate 2 nanojets propagating inside the block ME3 with refractive index $n_2$ with radiation angles $\theta_{B1}$ (NJ1, see dashed lines starting at top edges of block ME2 in Figure 9). As we can see, the hot spot of power distribution inside the metaelement in Fig. 9(b) corresponds to the crossing point of these two NJs. It is necessary to mention that in this cross-section view we did not take into account the refraction phenomenon at the boundaries between the insert B3 and main block ME2.

Second couple of NJs with radiation angles $\theta_{B2}$ inside the big block ME2 with refractive index $n_2$ is generated by the edges of the central block B3 with refractive index $n_3$ (NJ2, see dashed lines starting at top edges of block B3 in Fig. 9(a)). The propagation direction of these NJs will be changed due to the total internal reflection of the waves at the vertical edges of the big block ME2. As a result, at the bottom surface of the metaelement, we can observe 2 less intensive hot spots in the crossing points of NJ1 and NJ2 (crossing points of the dashed lines NJ1 and NJ2 on each side of block B3).

Figure 10 illustrates (a) the cross-section view of a double-material metaelement with the insert, for instance as the one illustrated in figure 6, and (b) the power density dis tribution in the xy-plane for the metaelement with the parameters: $n_1 = 1.0$, $n_2 = 2.105$, $W_1 = 260nm$, $W_2 = 100nm$, $H = 700nm$, $H_2 = 300nm$. $\lambda = 625nm$, $\theta_i = 30°$.

To explain the redistribution of the intensity inside the metaelements in the case of plane wave oblique incidence, we should take into account that the radiation angles $\theta'$ and $\theta''$ for opposite edges of the system are not equal (see Fig. 10(a)). As a result, for the main part we can have:

$$\theta'_{B1} \approx \theta_{B1} - \frac{\theta_i}{2}, \ \theta''_{B1} \approx \theta_{B1} + \frac{\theta_i}{2}.$$

In a similar way, the nanojets beam radiation angles for the insert (block B3) can be determined as:

$$\theta'_{B2} \approx \theta_{B2} - \frac{\theta_i}{2}, \ \theta''_{B2} \approx \theta_{B2} + \frac{\theta_i}{2}.$$

The reflection of the generated waves at the edges of the constitutive parts of the metaelements leads to the creation of the new NJ hot spots (cross points) and nonsymmetrical redistribution of the total power inside the metalements, as can be seen with figure 10(b).

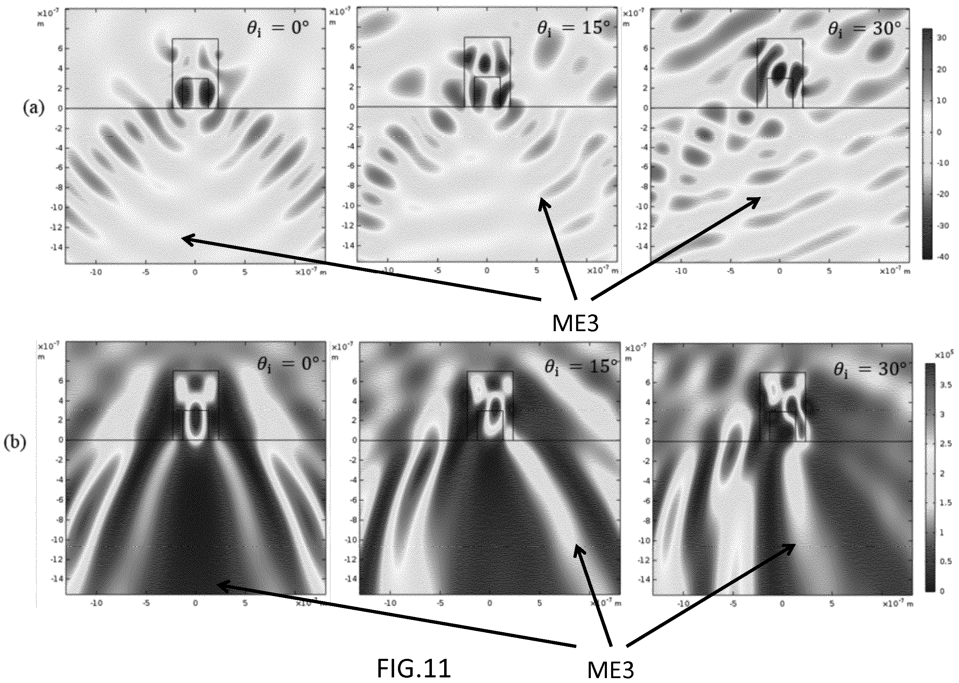

Let us put these elements onto the substrate with refractive index $n_3$ on Figure 6. Figure 11 (a) illustrates the Hy component field distribution (i.e. the distribution corresponding to the projection of the magnetic field on the y axis) and figure 11 (b) shows the power density distribution in the xy-plane for the metaelement as illustrated in figure 6, with the parameters: $n_1 = 1.0$, $n_2 = 2.105$, $n_3 = 1.52$, $W_1 = 260nm$, $W_2 = 100nm$, $H = 700nm$, $H_2 = 300nm$. $\lambda = 625nm$, for the 3 different angles of incidence $\theta_i$.

Here, below the metaelement, we can observe the NJs inside the substrate (ME3) after the corresponding wave refraction at the substrate surface. The power distribution presented in Figure 11(b) shows the intensive lobes inside the substrate generated in the result of wave interference. The constructive interference between the refracted waves obtained as a result of wedge diffraction of the periodic array of metaelements leads to the redistribution of the power between corresponding orders of diffraction. We should note that the central insert (B3) with lower refractive index helps us to almost fully suppress the intensity of 0-diffraction order in a case of normal incidence and to dramatically decrease it in the case of inclined incidence. Finally, we observe that the presented topology helps us to change the direction of propagation of the waves diffracted by the wedges of the elements of diffraction grating and to increase the intensity of $\pm 2^{nd}$ diffraction orders (see Fig.7).

## 5.2.2 Dual material and equal height insert

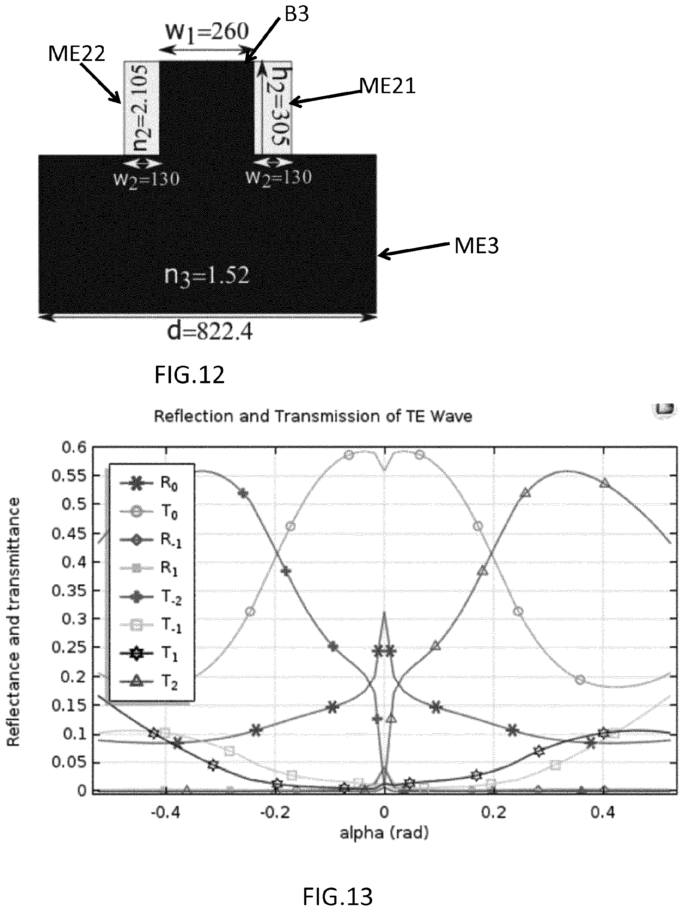

The structure from figure 6 is not the only one that could be used in order to achieve right performances, even if it might be a preferred one for the micro-fabrication process. Another geometry for the base pattern according to another embodiment, is depicted on figure 12. Such a geometry can achieve comparable performances

In the embodiment illustrated in figure 12, the base pattern comprises a block B3 of same dielectric material with refractive index $n_3$ as the substrate ME3. The block B3 is placed on top of the substrate ME3 and between two blocks ME21 and ME22 of dielectric material with refractive index $n_2$. The blocks B3, ME21 and ME22 have an identical height.

Numerical values indicated in figure 12 have been optimized for a wavelength of 625nm. However, slightly different values may be used for the wavelength of 625nm. Also, other numerical values could be used for other wavelength, as long as the grating pitch d is above the wavelength of the ligth it is dedicated to diffract.

Figure 13 illustrates performances of a diffraction grating based on the geometry from figure 12.

As can be seen from figure 13, The maximum diffraction efficiency is of 55 percent which is low but if we can use a material $n_2$ with higher values (2.3 to 2.5) the efficiency will increase significantly. The value used of $n_2$ = 2.105 is based on available silicon nitride ebeam lithography compatible material. Now, we discuss the nanojet analysis of the energy transfer to higher orders. We consider the symmetrical metaelement combining the block with refractive index $n_3$, width $W_1$ and height H placed between 2 similar blocks with the refractive index $n_2$, width $W_2$ and total height H, as illustrated with figure 12. We assume that $n_1$ is the refractive index of host medium and $n_1 < n_2 < n3$.

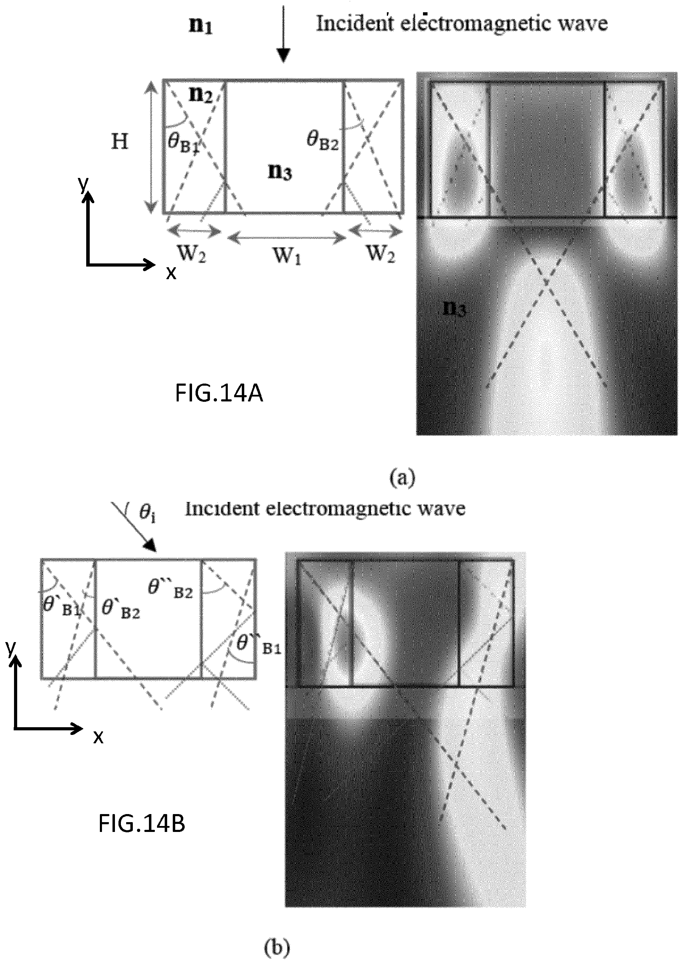

Figure 14A illustrates the cross-section views of a double-material metaelement with equal height insert (left part of figure 14A) and power density distributions in the xy-plane (right part of figure 14A) for the metaelement with the parameters: $n_1$ = 1.0, $n_2$ = 2.105, $n_3$ = 1.52, $W_1$ =260nm, $W_2$ =130nm, H=305nm, $H_2$ =300nm. $\lambda$=625nm and $\theta_i$ =0°. Figrue 14B illustrates the same but with $\theta_i$ =30°. As a result, in a case of normal incidence (Figure 14A) we will observe 2 NJs generated by the external edges between the media with refractive index $n_2$ and host medium and propagating at the angles $\theta_{B1}$ and 2 NJs generated at the edges between the blocks with refractive index $n_2$ and $n_3$ and propagating at the angles $\theta_{B2}$ (see dashed lines in figure 14A).

As we can see, two hot spots of power distribution inside the similar blocks with refractive index $n_2$ in figure 14A corresponds to the crossing point of two NJs with different radiation angles. The transmission of jet waves diffracted by the external wedges into the central part (insert) of the element leads to the creation of a new hot spot outside the structure along the axis of the symmetry of the metaelement.

It is necessary to note that representing the schematic distribution of the NJs we did not take into account the refraction phenomenon leading to the shift of the NJs' crossing point along the axis of the symmetry. The existence of such NJ hot spot for each metaelement explains the high intensity of 0-diffraction order in a case of normal incidence (see Fig.13).

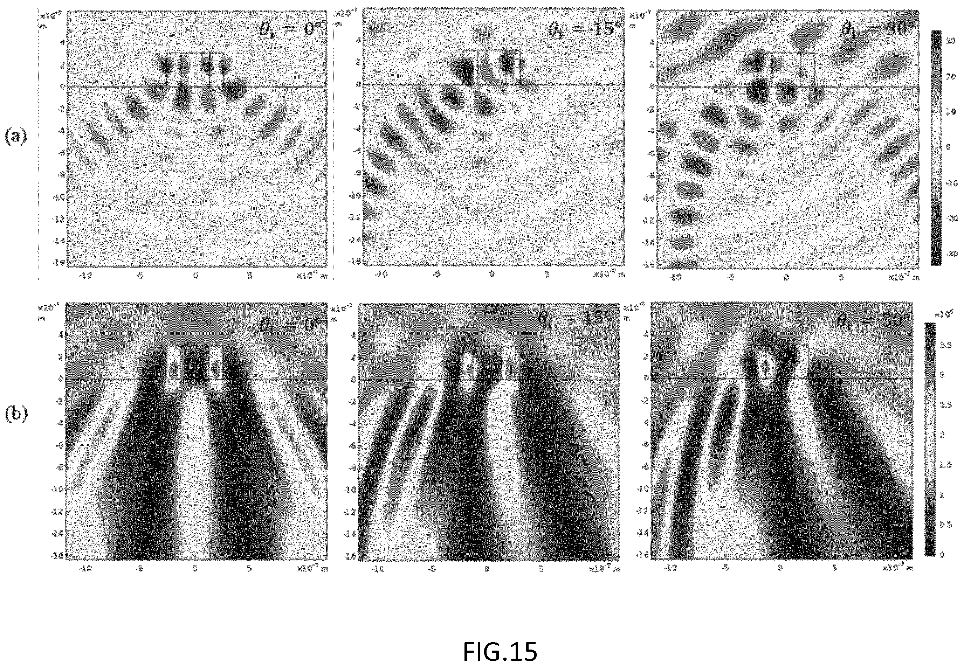

Figure 15 illustrates the Hy component field distribution (a) and power density distribution (b) in the xy-plane for a metaelement as illustrated in figure 12, with the parameters: $n_1$ = 1.0, $n_2$ = 2.105, $n_3$ = 1.52, $W_1$ = 260nm, $W_2$ = 130nm, H = 305nm, $H_2$ = 300nm. $\lambda$ = 625nm, for 3 different angle of incidence, when the geometry structure illustrated in figure 12 is placed with a substrate of dielectric material having refractive index $n_3$.

Changing the angle of electromagnetic wave incidence from 0 to +30 degrees, we observe that the waves diffracted by the internal wedges (wedges of the inserts) transmit into the substrate (see Fig. 15(a)) and make an input into the 2nd diffraction order. The power distribution presented in Fig. 15(b) shows the intensive lobes inside the substrate generated in the result of diffrated waves' interference. For the negative angles of incidence, we observe the intensification of ±2nd diffraction order. As in the case of the metaelements with the inserts (figure 6), the total internal reflection phenomenon plays a crucial role by changing the propagation direction of diffracted waves and leading to the redistribution of the power between corresponding diffraction orders.

5.2.3 Twin structure

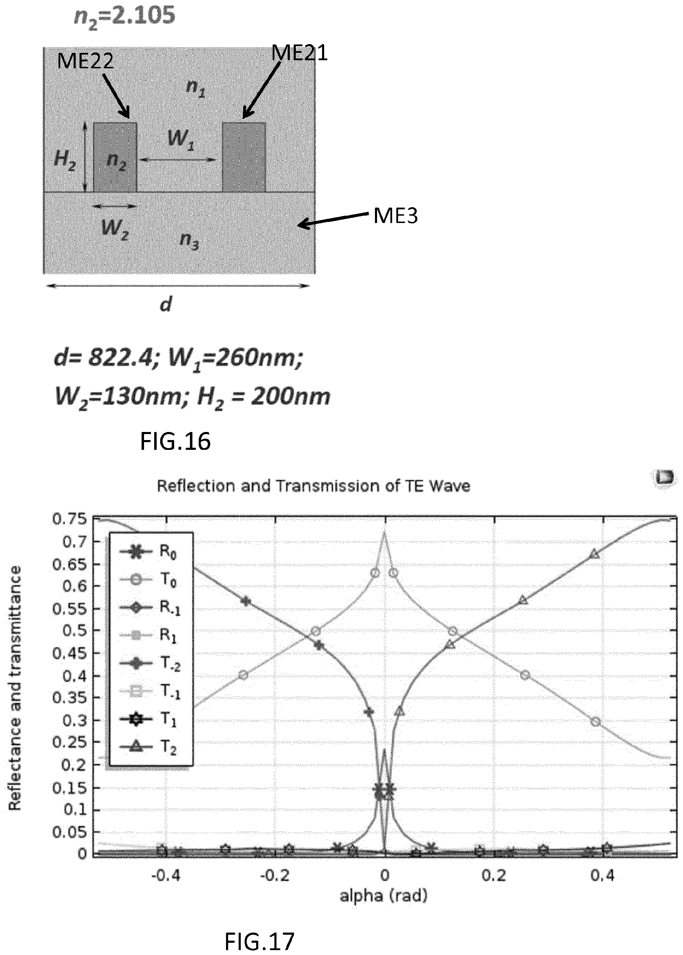

Figure 16 illustrates a base pattern according to another embodiment of the present principle. The base pattern of the structure is based here on a high index single material having a refractive index $n_2$ deposited and e-beamed on a glass substrate ME3 having a refractive index $n_3$. According to the present embodiment, this results in two blocks ME21 and ME22 of single material having refractive index $n_2$ and having same dimensions placed on top of the substrate ME3 and separated by a determined distance $W_1$. The space separating the two blocks ME21 and ME22 is naturally filled with the host medium (with refractive index $n_1$).

For this geometry, there is no glass etching required, and no multiple e-beam lithography, and these two facts are great advantages for the micro-fabrication. The structures are also very shallow with a height $H_2$ of 200nm in the example presented here, to compare with the embodiment illustrated in figure 6 which has a height of 700nm.

Figure 17 illustrates the performance of the twin structure of figure 16. On figure 17, we can see that $\eta_{max}$ = 75%, $\Gamma$ = 64% from 3 to 30 and -30 to -3 degrees.

The performances are very good since we achieve a maximum diffraction efficiency of 75% and a diffraction uniformity of 64%. Those values are excellent and real improvements when compared to structures from figures 6 and 12.

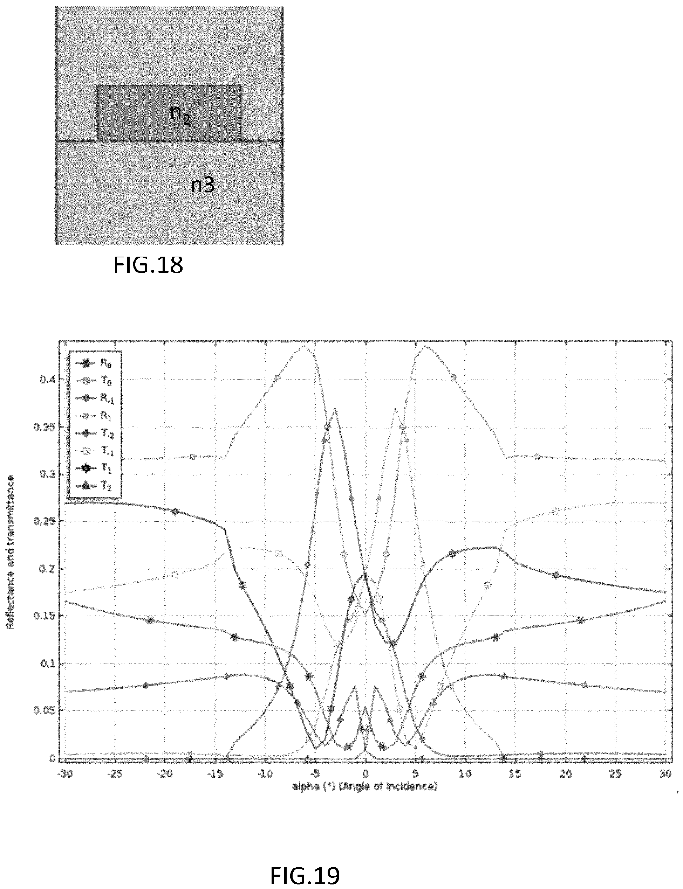

It is interesting also to see what happens to performances for a regular grating which is not optimized, neither nanojet wise nor for the second diffraction order, according to prior art systems. Such a geometry is illustrated in figure 18 showing a single material of refractive index $n_2$ deposited on a glass substrate with refractive index $n_3$. Figure 19 shows the very poor diffraction efficiency of second orders in that case.

We now discuss the nanojet analysis of the energy transfer to higher orders for the twin structure illustrated on figure 16.

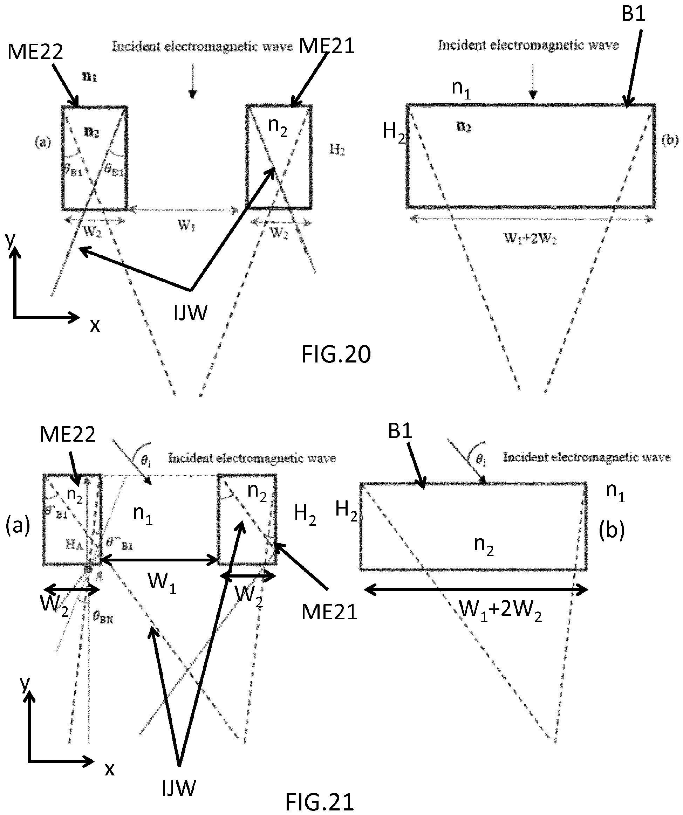

Figure 20 illustrates the cross-section views of single-material metaelements for the embodiment illustrated in figure 16 (figure 20 (a)) and for a single material metaelement as a single block (B1, figure 20 (b)), with the parameters: $n_1$ = 1.0, $n_2$ = 2.105, $W_1$ =260nm, $W_2$ =130nm, H=200nm, $\theta_i$ =0°. Figure 21 illustrates the same as figure 20 but with an incident angle of the electromagnetic wave $\theta_i$ =30°.

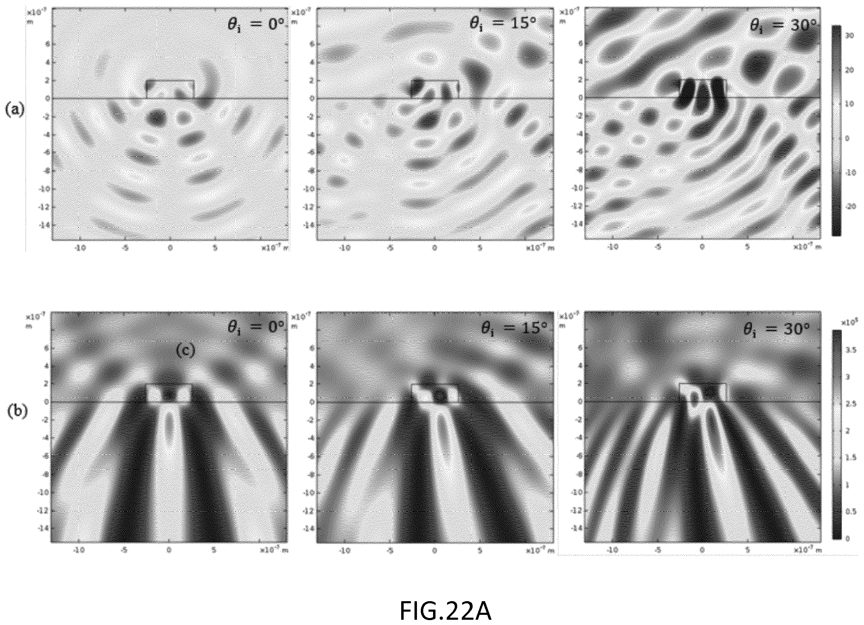

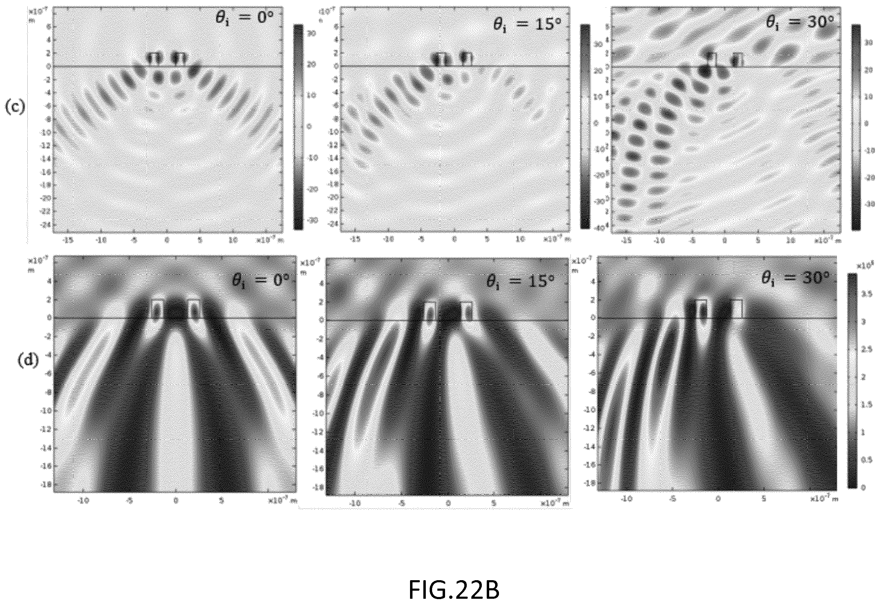

Figure 22A illustrates the Hy component field distribution (a) and power density distribution (b) in the xy-plane for the single NJ element B1 of right part of figure 20 for three different incident angles and figure 22B illustrates the Hy component field distribution (c) and power density distribution (d) in the xy-plane for the twin structure metaelements ME21 and ME22 of left part of figure 20. In both cases, the parameters are the following: $n_1$ = 1.0, $n_2$ = 2.105, $n_3$ = 1.52, $W_1$ = 260nm, $W_2$ = 130nm, $H_2$ = 200nm, $\lambda$ = 625nm.

The total internal reflection phenomenon helps us to modify the response of the system in the case of single material elements. Let us consider the 2 similar dielectric blocks ME22 and ME21 with refractive index $n_2$, width $W_2$ and height $H_2$. In figure 20(a), and 21(a), we assume that $W_1$ is the distance between the elements and $n_1$ is the refractive index of host medium and $n_1 < n_2 < n_3$.

Let us compare this twin system with the single dielectric block B1 with refractive index $n_2$, width $W_1 + 2W_2$ and height $H_2$ illustrated in figure 20(b) and 21(b). In the single NJ element system, we have just 2 NJs associated with 2 external edges (left and right edges) of the block B1 (see Figure 20(b), dashed lines correspond to NJ beams with the deviation angle $\theta_{B1}$).

The existence of two additional edges in the double block system or twin structure for $\theta_i$ = 0 degrees leads to radiation of 4 NJs (2 NJs in each block for left and right edges) with deviation angles $\theta_{B1}$ (see dashed lines in Figure 20, dashed lines indicated by IJW correspond to the NJ beams generated by the internal edges in the twin system (Figure 20(a)). By changing the distance between the internal edges, we can satisfy the condition of constructive and destructive interference for the corresponding waves diffracted by the right or left edges of the elements and propagating in the same direction. Finally, for the parameters of the system mentioned above, we get that diffracted waves propagating in the same direction will interfere destructively or constructively. So, we can intensify or suppress the distributions at corresponding angles (see Figure 22B(c)).

For a case of normal incidence, the radiation angles of all NJs are the same $\theta_{B1}$. Comparing the power distribution for these systems, we can conclude that in a case of twin structure the existence of two additional internal edges leads to the decrease of the intensity of the central NJ (this central NJ resulting from the intersection of NJs generated by the external edges of the element is directed along the axis of the symmetry of metaelements) and to the beginnings of 2 additional NJs with higher intensity resulting from the intersection of NJs generated by the external and internal edges of the blocks.

For the inclined incidence, we get first pair of NJs with radiation angles $\theta'_{B1}$ and second pair with radiation angles $\theta''_{B1}$. Equations for $\theta'_{B1}$ and $\theta''_{B1}$ have already been discussed earlier in the dual material solution with insert and are not repeated here.

The combination of constructive and destructive phenomena for each pair with the total internal reflection of the waves for some angles of incidence leads again to the redistribution of the intensity between the corresponding diffraction orders for the periodic array of the metaelements. As a result, we can suppress $\pm 1^{st}$ diffraction orders and dramatically increase the intensities of $\pm 2^{nd}$ diffraction orders as illustrated by the comparison of Figures 17 and 19.

To optimize the response of this system we should consider some parameters' restrictions to provide intensification of $\pm 2^{nd}$ diffraction orders for the proposed topology. To get maximal intensity of the $2^{nd}$ diffraction order, in the case of negative angles of incidence we must take the twin elements with such parameters:

1. To change the direction of NJs generated by the left vertical edge of the elements, we must take $H_2 \geq \dfrac{W_2}{\tan \theta'_{B1}}$ ;

2. To avoid the reflection of the NJs generated by the right vertical edges of the elements, we should take $H_2 < \dfrac{W_2}{\tan \theta''_{B1}}$;

3. The width of corresponding blocks and distance between the blocks depend on the period of diffraction grating:

$W_1 < \dfrac{d}{3}$ and $W_1 + W_2 \neq \dfrac{d}{2}$. In an ideal case to provide the constructive interference between the NJs generated by the left or right edges of the blocks we must take $W_1 + W_2 \approx \dfrac{\lambda}{\sin \theta'_{B1} \times n_3 - n_1 \times \sin \theta_i}$ or

$W_1 + W_2 \approx \dfrac{\lambda}{\sin \theta''_{B1} \times n_3 - n_1 \times \sin \theta_i}$. But optimizing these parameters we also should take into account that we would like to get good diffraction uniformity of the system in the wide range of the angles of incidence. Thus, it is impossible to provide the constructive interference for all angles of incidence.

4. It is necessary to note that inside each block the NJs generated by the opposite edges will intersect at some point A (see Fig.21). The distance between the top of each block and this point of intersection can be determined as

$H_A \approx \dfrac{W_2}{\tan \theta'_{B1} - \tan \theta''_{B1}}$. To get the maximal NJ input into the corresponding diffraction order the angle of focal point A deviation from the vertical axis $\theta_{BN}$ $\left( \tan \theta_{BN} \approx \dfrac{\tan \theta'_{B1} + \tan \theta''_{B1}}{2} \right)$ should approximate to the angle of corresponding diffraction order distribution. Also, the focal point A must be close to the boundary between the element and substrate ($H_2 \rightarrow H_A$).

In a case of positive angles of incidence, taking the twin elements with such parameters, we observe an intensified +2nd diffraction order.

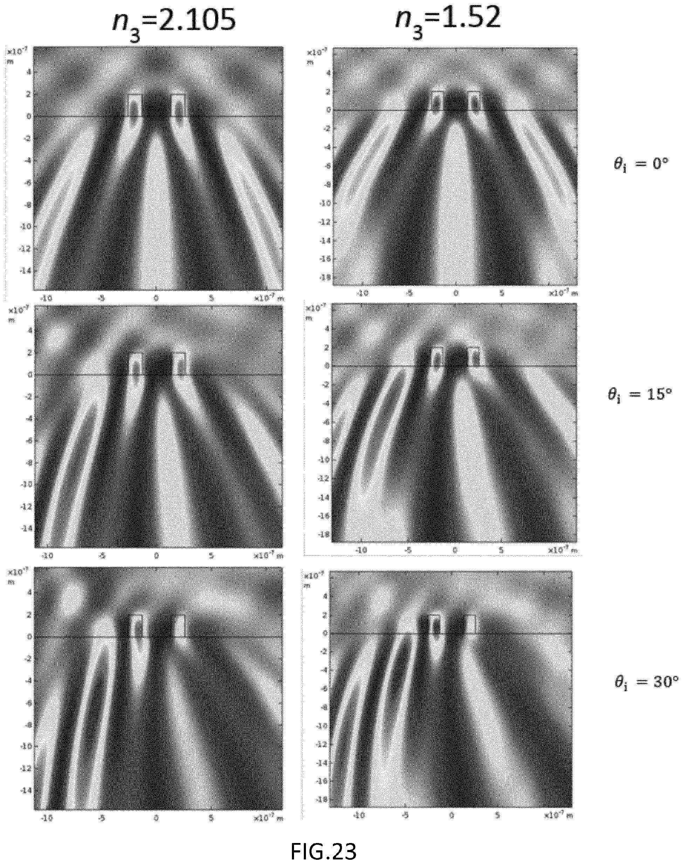

Considering a diffraction grating presenting a periodic array of the twin metaelements placed on the substrate with lower refractive index as illustrated in figure 16, we should remember about refraction of the wave diffracted by the edges of the metaelements at the boundary between the substrate and elements affecting the angle NJ deviation. Figure 23 illustrates the power density distribution in the xy-plane for the twin structure metaelement with the parameters: $n_1$ = 1.0, $n_2$=2.105, $W_1$ = 260nm, $W_2$ = 130nm, $H_2$ = 200nm, $\lambda$ = 625nm; and $n_3$ = 2.105 for the left column and $n_3$ = 1.52 for the right column.

### 5.2.4 U-shaped structure

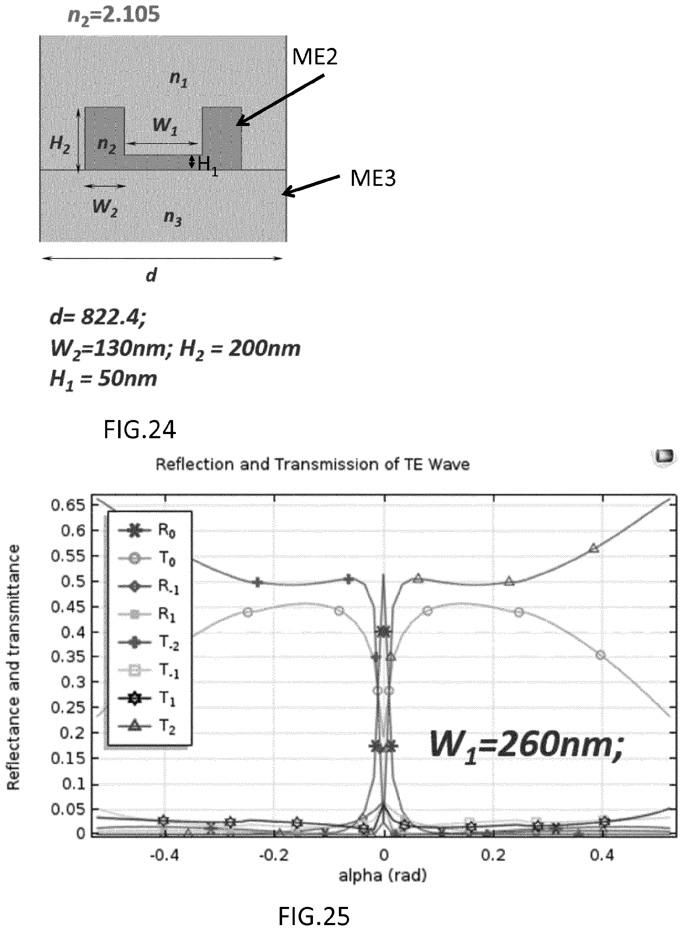

Figure 24 illustrates another embodiment for a base pattern of a diffaction grating of an optical device according to the present principle. According to this embodiment, the base pattern consists in a block ME2 of single material having a refractive index $n_2$ and having a U shape, placed on top of a substrate ME3 having refractive index $n_3$. Values presented on figure 24 are only examples. More precisely, the U-shape form is commonly known as a form forming the letter U. On figure 24, it can be seen, that the block ME2 has two lobes or blocks of single material having a refractive index $n_2$ of height $H_2$ and width $W_2$ separated by a band of same single material having a refractive index $n_2$ of height $H_1$ and width $W_1$.

Geometry wise, a high index $n_2$ single material is deposited and e-beamed on a glass substrate ME3. There is no glass etching required, and no multiple e- beam lithography, and these two facts are great advantages for the micro-fabrication.

The structures are also very shallow with a height of 200nm, to compare with the embodiment disclosed with figure 6 which has a height of 700nm.

As illustrated by figure 25, the performances are very good since we achieve a maximum diffraction efficiency of 65%, which is somewhat lower than the efficiency achieved with the twin structure, but here, it is the diffraction uniformity which reaches excellence with a value of Γ = 87%. Those values are excellent and real improvements when compared to structures from figures 6 and 12.

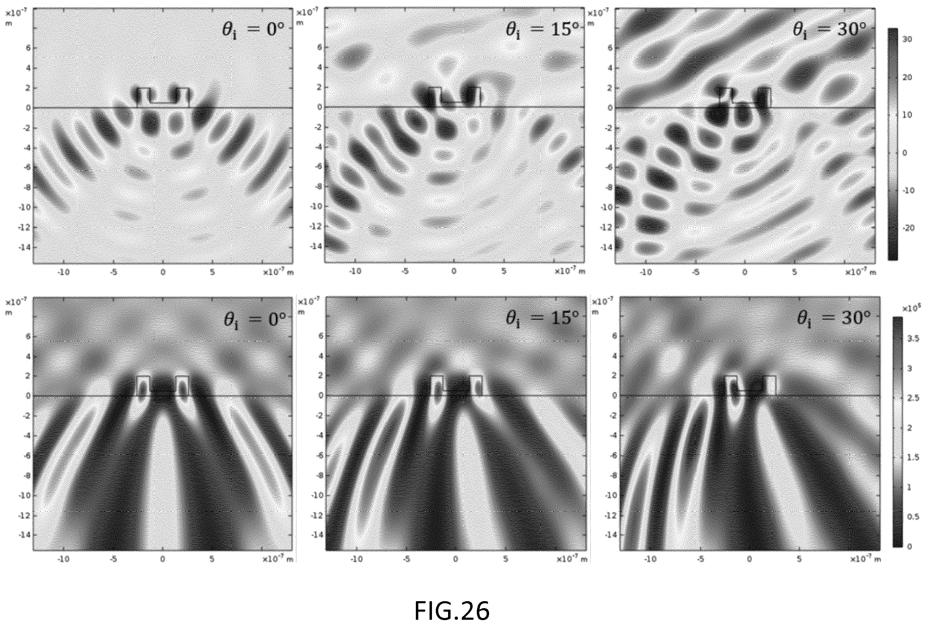

Figure 26 illustrates the Hy component distribution (top part) and power density distribution (bottom part) in the xy-plane for the U-shaped metaelement illustrated in figure 24, with the parameters: $n_1$ = 1.0, $n_2$ = 2.105, $n_3$ = 1.52, $W_1$ = 260nm, $W_2$ = 130nm, $H_2$ = 200nm, $H_1$ = 50nm, $\lambda$ = 625nm.

Let us note that the U-shape metaelement with higher refractive index $n_2$ helps to decrease the intensity of central NJ in a case of normal incidence and increase the intensity of the side lobes.

Finally, we observe that for the U-shaped topology we can increase the intensity of $\pm$2nd diffraction orders for the small angles of incidence and improve the diffraction uniformity as illustrated by the performances shown on figure (see Figure 25).

To determine the height of the central block ($H_1$) we should take into account that for some particular angles of incidence the NJs generated by the left edge of the left block (in the case of negative angles of incidence) or by the right edge of the right block (in the case of positive angles of incidence) will not be reflected by the opposite edges and will not change the direction of propagation. For the rest of the incidence angles we must take $H_2 - H_1 \geq \dfrac{W_2}{\tan \theta'_{B1}}$

Equations for $\theta'_{B1}$ have already been discussed earlier in the dual material solution with insert and are not repeated here.

The width $W_1$ of the central band separating the two lobes of the U-shape should also satisfy the relations defined for $W_1$ and $W_2$ in the twin structure.

5.2.5 Pitch tolerancing

The values provided for the U-shaped structure must be tolerance robust, and the pitch variation has been investigated in order to check the precision required for the fabrication. The original pitch is d = 823nm.

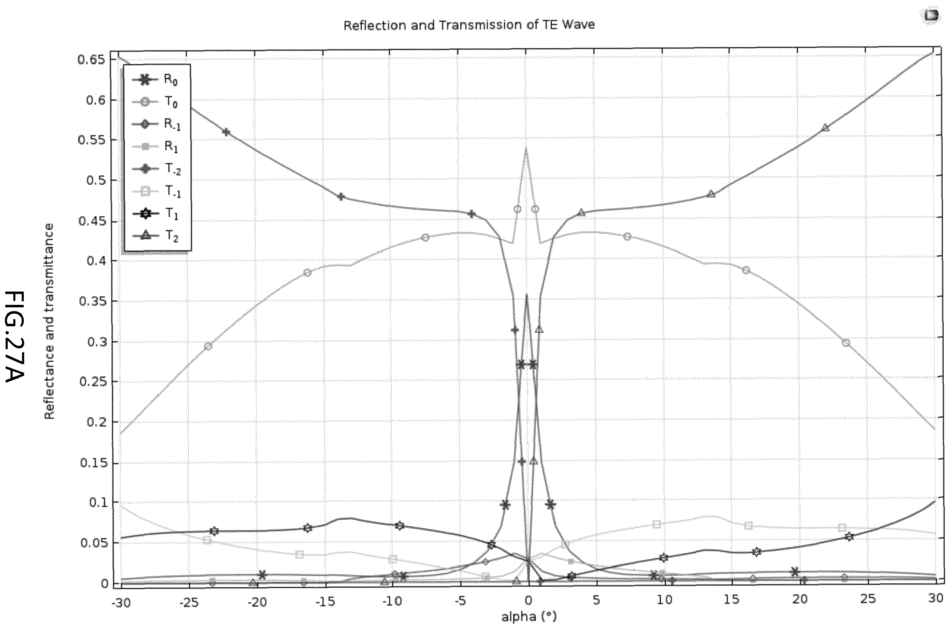

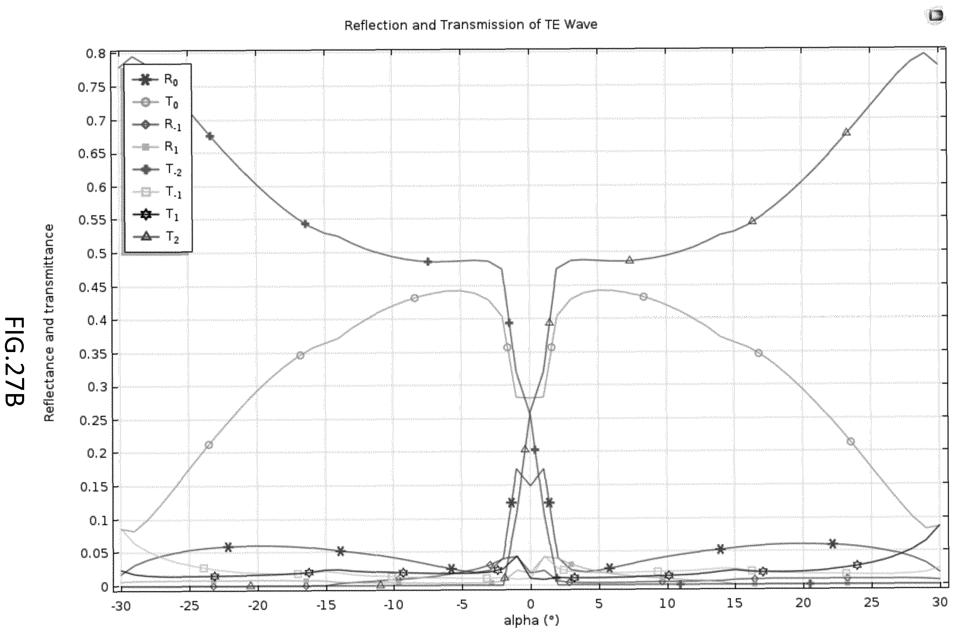

Figure 27 illustrates the tolerancing in the pitch size for d = 818nm and d = 832nm. The top part of figure 27 represents the performances for d = 818nm. It has $\eta_{max}$ = 65%, $\Gamma$ = 81.8%. The bottom part of figure 27 represents the performances for a pitch of d = 832nm. It is of $\eta_{max}$ = 78.5%, $\Gamma$ = 76.2%. If the performances are good for 832nm, they will be good for 828nm too.

From figure 27, we can see that diffraction orders $\pm 2$ still have a high diffraction efficiency and uniformity for d = 823$\pm$5nm.

5.4 Nanojet enhanced single mode of higher order diffraction

We have previously described over-wavelength structure for dual mode diffraction. Such dual mode diffraction was achieved thanks to the symetric structure of the base pattern of the diffraction grating.

The principle discussed above (having over-wavelength grating pitch and second order diffraction) can also be extended to an in-coupler that just deviates the image into a single side of the waveguide instead of deviating positive angles into one direction and negative angles into another one.

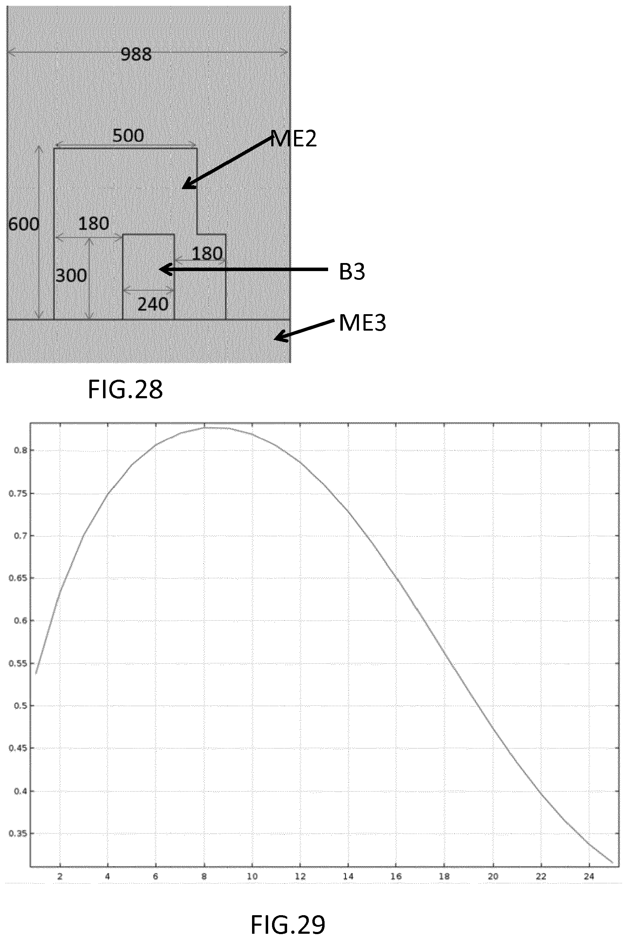

For that purpose, the geometry needs to break the symmetry in order to enhance one diffraction order. Figure 28 illustrates a geometry and pitch size for an alternative embodiment of the base pattern of the diffraction grating. We can see on figure 28, that the grating's pitch is even bigger (988 nm in that case), it is almost a micro-meter sized spacing, its aspect ratio is close to 1.

According to such an embodiment, the base pattern is similar to the geometry illustrated with figure 6, but with a height on the right side that is lower than the height on the left side, to break the symetry.

Figure 29 illustrates the performance of such a geometry. The horizontal axis spans $\pm 12$ degrees. We can see that the curve is the +2 diffraction order efficiency as a function of the angle of incidence. This structure achieves a maximum efficiency of 84 percent and a uniformity of 54 percent for input angles spanning $\pm 12$ degrees.

5.5 Diffraction grating for use in AR/VR glasses

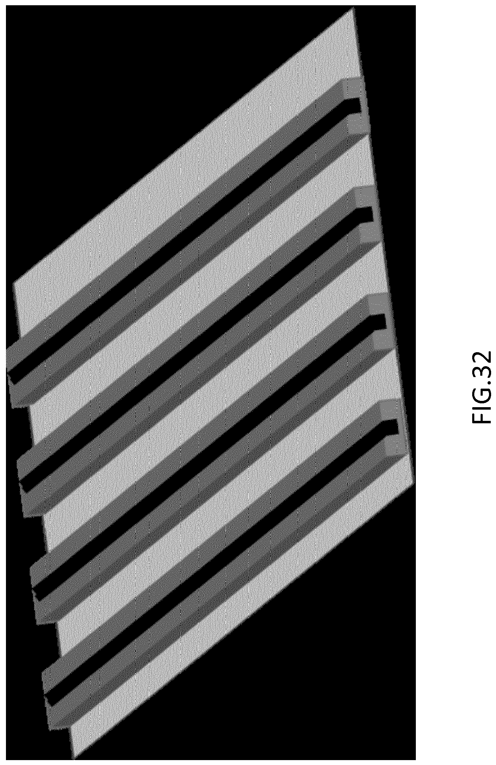

Figure 32 illustrates an exemplary diffraction grating according to an embodiment of the present disclosure. Accoding to the embodiment, the base pattern of the diffraction grating has a U-shape as illustrated with figure 24.

According to an embodiment of the present disclosure, the diffraction grating having a base pattern according to any one of the embodiments disclosed herein can be dedicated to diffract only a given wavelegth. For instance, when used in a optical waveguide, one diffraction grating per RGB color can be used. This embodiment allows to minimize chromatic aberrations and a grating dedicated to a narrow band has a much better performance in terms of FoV.

According to another embodiment of the present disclosure, the diffraction grating is configured to diffract light for a group of wavelengths comprising more than one wavelength. In that case, the NJ structure base pattern of the diffraction grating should be configured such that the grating pitch is above the highest wavelength of the group of wavelengths. For example, $d = \dfrac{M\Lambda}{n}$ with $\Lambda = \dfrac{\lambda_{max} + \lambda_{min}}{2}$ and $M = 2$, n is the index of the substrate.

According to an embodiment of the present disclosure, the diffraction grating having a base pattern according to any one of the embodiments disclosed herein can be used in an optical waveguide, for instance for use in a waveguide in AR/VR glasses.

According to this embodiment, the diffraction grating can be configured for in-coupling light incoming into the optical waveguide or for extracting light out of the optical waveguide depending on where the diffraction grating is formed on the waveguide.

According to another embodiment of the present disclosure, the optical waveguide can comprise two diffraction gratings according to any one of the embodiments disclosed herein: one diffraction grating configured for in-coupling light incoming into said optical waveguide and another diffraction grating configured for extracting light out of said optical waveguide.

Each diffraction grating having a grating pitch above a wavelength of the light it is configured to in couple or out couple, and both diffraction grating being configured to diffract said light at a diffraction order having an absolute value equal to or greater than 2.

According to an embodiment of the present disclosure, an eyeware apparatus is disclosed which comprises an optical device accoding to any one of the embodiment disclosed above.

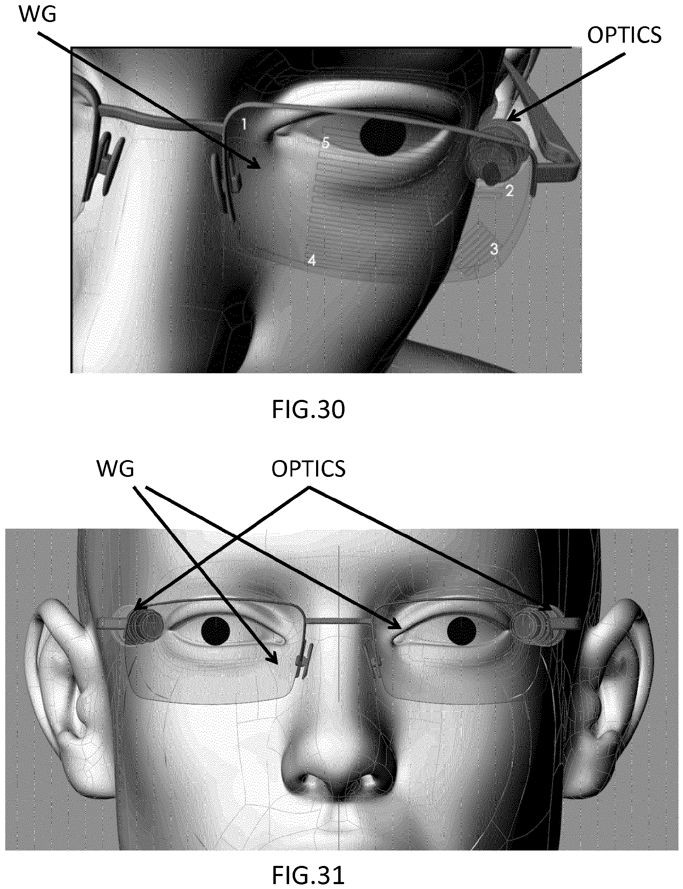

Figure 30 illustrates a perspective schematic view of an eyewear apparatus according to an embodiment of the present disclosure, and figure 31 illustrates a schematic front view of the eyewear apparatus illustrated with figure 30.

According to an embodiment of the present disclosure, such an eyeware apparatus comprises:

- a light display engine (not shown) configured for emitting an image to display, the light engine display could for instance be placed on the branches of the eaywear apparatus,
- a group of optics (OPTICS) configured for coupling incoming light from the light display engine to the optical waveguide (WG).

According to the embodiment disclosed here, the optical waveguide (WG) is configured for guiding incoming light towards an eye of a user to make the image visible to the user.

According to the embodiment illustrated on figure 30, optical waveguide (WG), also referenced with a "1" comprises an input grating ("2"on figure 30) playing the role of an in-coupler. The input grating may be a diffraction grating according to any of the embodiments described above.

The optical waveguide also comprises a vertical eye-pupil expander ("3" on figure 30), a horizontal eye-pupil expander ("4" on figure 30) and an output grating ("5" on figure 30) or out-coupler. According to an embodiment of the present disclosure, the output grating may be a diffraction grating according to any of the embodiments described above.

As shown on figure 31, in order to have a stereoscopic view, image is emitted from two light engines (not shown) placed respectively on the two branches of the eyewear apparatus. The eyewear apparatus also comprising two waveguides (WG) on each side of the apparatus, as well as two sets of optics (OPTICS) for guiding the light from the respective light engine to the respective waveguide.

## Claims

1. An optical device comprising at least one diffraction grating, wherein said at least one diffraction grating is configured to diffract a light of at least one given wavelength incident on said optical device, wherein said at least one diffraction grating has a grating pitch above said at least one given wavelength, wherein said at least one diffraction grating is configured to diffract said incident light at a diffraction order having an absolute value equal to or greater than 2, wherein the optical device is an optical waveguide configured for guiding said light diffracted at a diffraction order having an absolute value equal to or greater than 2.

2. The optical device according to claim 1, wherein said at least one diffraction grating comprises a base pattern comprising at least one dielectric material, said base pattern being configured to form a nanojet beam associated with edges of the base pattern from said light incident on said at least one diffraction grating.

3. The optical device according to any one of claims 1-2, wherein said at least one diffraction grating comprises at least one dielectric material with refractive index $n_2$ deposited on a substrate with refractive index $n_3$, and $n_3 < n_2$.

4. The optical device according to claim 3, wherein said base pattern of said at least one diffraction grating is configured according to at least any one of the following arrangements:

   - said base pattern comprises a block of a same dielectric material with refractive index $n_3$ as said substrate, on top of said substrate, said block of a same dielectric material with refractive index $n_3$ being inserted into one block of said dielectric material with refractive index $n_2$, or,
   - said base pattern comprises a block of same dielectric material with refractive index $n_3$ as said substrate, on top of said substrate, said block of a same dielectric material with refractive index $n_3$ being placed between two blocks of dielectric material with refractive index $n_2$, said block of dielectric material with refractive index $n_3$ and said two blocks of dielectric material with refractive index $n_2$ having identical height, or
   - said base pattern comprises two blocks of dielectric material with refractive index $n_2$ having identical dimensions,

on top of said substrate, said two blocks being placed at a determined distance, or,
- said base pattern comprises one block of said dielectric material with refractive index $n_2$ on top of said substrate, said block having a U shape.

5. The optical device according to claim 4, wherein when said base pattern comprises two blocks of dielectric material with refractive index $n_2$ having identical dimensions, on top of said substrate, said two blocks being placed at a determined distance $W_1$, said two blocks have a height $H_2$ with $H_2 \geq \frac{W_2}{\tan \theta'_{B1}}$ and $H_2 < \frac{W_2}{\tan \theta''_{B1}}$ with $W_2$ being the width of each of the two blocks and $\theta'_{B1}$ and $\theta''_{B1}$ being respective angles of nanojet beams radiation associated with edges of the base pattern from said light incident on said at least one diffraction grating, wherein $\theta'_{B1} \approx \theta_{B1} - \frac{\theta_i}{2}$, $\theta''_{B1} \approx \theta_{B1} + \frac{\theta_i}{2}$ with $\theta_i$ being the angle of the incident light with respect to a normal to the top surface of said diffraction grating and $\theta_{B1} \approx \frac{90° - \sin^{-1}\left(\frac{n_1}{n_2}\right)}{2}$, $n_1$ being the refractive index of host medium in which the diffraction grating is placed.

6. The optical device according to claim 4, wherein when said base pattern comprises one block of said dielectric material with refractive index $n_2$ on top of said substrate, having a U shape, said U-shape consisting in two lobes of height $H_2$ and width $W_2$ separated by a central block of height $H_1$, with $H_1$ lower than $H_2$, and $H_2 - H_1 \geq \frac{W_2}{\tan \theta'_{B1}}$ with $\theta'_{B1} \approx \theta_{B1} - \frac{\theta_i}{2}$ with $\theta_i$ being the angle of the incident light with respect to a normal to the top surface of on said diffraction grating and $\theta_{B1} \approx \frac{90° - \sin^{-1}\left(\frac{n_1}{n_2}\right)}{2}$, $n_1$ being the refractive index of host medium in which the diffraction grating is placed.

7. The optical device according to any one of claims 5 or 6, with $W_1$ being said determined distance or a width of said central block, and $W_2$ being the width of each of said two blocks or of each of said two lobes, $W_1$ and $W_2$ depend on a grating pitch d of said diffraction grating with $W_1 < \frac{d}{3}$ and $W_1 + W_2 \neq \frac{d}{2}$.

8. The optical device according to any one of claims 1-7, wherein said base pattern has a symmetric geometry.

9. The optical device according to any one of claims 1-7, wherein said base pattern has an asymmetric geometry.

10. The optical device according to any one of claims 1-9, said at least one diffraction grating is configured to diffract light for a group of wavelengths comprising more than one wavelength, and wherein said grating pitch is above the highest wavelength of said group of wavelengths.

11. The optical device according to any one of claims 1-10, comprising one diffraction grating per Red, Green and Blue color.

12. The optical device according to any one of claims 1-10, wherein said at least one diffraction grating is configured for in-coupling light incoming into said optical waveguide or for extracting light out of said optical waveguide.

13. The optical device according to any one of claims 1-10, wherein said at least one diffraction grating is configured for in-coupling light incoming into said optical waveguide and wherein said optical waveguide comprises another diffraction grating configured for extracting light out of said optical waveguide, said other diffraction grating having a grating pitch above a wavelength of said light and said other diffraction grating being configured to diffract said light at a diffraction order having an absolute value equal to or greater than 2.

**14.** An eyewear apparatus, comprising at least one optical device according to any one of claims to any one of claims 1-13.

**15.** An eyewear apparatus according to claim 14, comprising:

- a light display engine configured for emitting an image to display,
- a group of optics configured for coupling incoming light from the light display engine to said optical waveguide,
- said at least one optical waveguide being configured for guiding incoming light towards an eye of a user to make the image visible to the user.

$\theta_1^G$ $\theta_1^C$ $\theta_2^G$ $\theta_2^C$

Fig. 1A

$-\theta_1^G$ $+\theta_1^G$ $-\theta_1^C$ $+\theta_1^C$ $-\theta_2^G$ $+\theta_2^G$ $-\theta_2^C$ $+\theta_2^C$

Fig. 1B

PW

DG

-2 -1 0 +1 +2

Fig. 2A

FIG.3

FIG.4A

FIG.4B

FIG.5

EP 3 671 293 A1

FIG.6

Reflection and Transmission of TE Wave

FIG.7

FIG.8

FIG.9

FIG.10

FIG.11

FIG.12

FIG.13

$n_1$

Incident electromagnetic wave

$n_2$

$\theta_{B1}$

$\theta_{B2}$

H

$n_3$

y

$W_2$ $W_1$ $W_2$

x

$n_3$

FIG.14A

(a)

$\theta_i$ Incident electromagnetic wave

$\theta^{`}_{B1}$ $\theta^{`}_{B2}$ $\theta^{``}_{B2}$

$\theta^{`}_{B1}$

y

x

FIG.14B

(b)

FIG.15

$n_2 = 2.105$

$d = 822.4; W_1 = 260nm;$

$W_2 = 130nm; H_2 = 200nm$

FIG.16

Reflection and Transmission of TE Wave

FIG.17

FIG.18

FIG.19

FIG.20

FIG.21

FIG.22A

EP 3 671 293 A1

FIG.22B

FIG.23

$n_2 = 2.105$

ME2

ME3

$d = 822.4;$
$W_2 = 130nm; H_2 = 200nm$
$H_1 = 50nm$

FIG.24

Reflection and Transmission of TE Wave

$W_1 = 260nm;$

alpha (rad)

FIG.25

FIG.26

FIG.27A

FIG.27B

FIG.28

FIG.29

FIG.30

FIG.31

FIG.32

Europäisches
Patentamt

European
Patent Office

Office européen
des brevets

# EUROPEAN SEARCH REPORT

Application Number

EP 18 21 5212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 339 938 A1 (HOYA LENS THAILAND LTD [TH]) 27 June 2018 (2018-06-27)<br>* paragraphs [0013] - [0046]; figures 1-18 * | 1-15 | INV.<br>G02B5/18<br>G02B27/00<br>G02B27/01 |
| X | WO 2009/083977 A2 (MIRAGE INNOVATIONS LTD [IL]; REINHORN SILVIU [IL] ET AL.) 9 July 2009 (2009-07-09)<br>* page 11, line 30 - page 27, line 23; figures 2, 5A, 5B * | 1-15 | |
| X | US 2009/190094 A1 (WATANABE MITSUYOSHI [JP] ET AL) 30 July 2009 (2009-07-30)<br>* paragraphs [0030] - [0055]; figures 1-4 * | 1-15 | |
| A | DRAZIC V ET AL: "Localized Photonic Jets Generated by Step-Like Dielectric Microstructures",<br>2018 20TH INTERNATIONAL CONFERENCE ON TRANSPARENT OPTICAL NETWORKS (ICTON), IEEE,<br>1 July 2018 (2018-07-01), pages 1-4, XP033407411,<br>DOI: 10.1109/ICTON.2018.8473925<br>[retrieved on 2018-09-26]<br>* abstract; figure 1 * | 2 | TECHNICAL FIELDS SEARCHED (IPC)<br><br>G02B |
| A | LIU CHENG-YANG ET AL: "Localized photonic nanojets formed by core-shell diffraction gratings",<br>PROCEEDINGS OF SPIE; [PROCEEDINGS OF SPIE ISSN 0277-786X VOLUME 10524], SPIE, US,<br>vol. 10242, 17 May 2017 (2017-05-17),<br>pages 102420W-102420W, XP060090411,<br>DOI: 10.1117/12.2263608<br>ISBN: 978-1-5106-1533-5<br>* the whole document * | 2 | |

-/--

The present search report has been drawn up for all claims

| Place of search | Date of completion of the search | Examiner |
|---|---|---|
| Munich | 26 June 2019 | Zwerger, Markus |

EPO FORM 1503 03.82 (P04C01)

page 1 of 2

Europäisches Patentamt
European Patent Office
Office européen des brevets

# EUROPEAN SEARCH REPORT

Application Number

EP 18 21 5212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GEINTS YU E ET AL: "Modeling spatially localized photonic nanojets from phase diffraction gratings", JOURNAL OF APPLIED PHYSICS, AMERICAN INSTITUTE OF PHYSICS, US, vol. 119, no. 15, 21 April 2016 (2016-04-21), XP012206957, ISSN: 0021-8979, DOI: 10.1063/1.4946846 [retrieved on 1901-01-01] * abstract; figure 1 * | 2 | |
| A | US 2018/231771 A1 (SCHUCK III MILLER HARRY [US] ET AL) 16 August 2018 (2018-08-16) * paragraphs [0115] - [0117]; figure 13 * | 11 | |

TECHNICAL FIELDS
SEARCHED       (IPC)

The present search report has been drawn up for all claims

| Place of search | Date of completion of the search | Examiner |
|---|---|---|
| Munich | 26 June 2019 | Zwerger, Markus |

EPO FORM 1503 03.82 (P04C01)

page 2 of 2

## ANNEX TO THE EUROPEAN SEARCH REPORT
## ON EUROPEAN PATENT APPLICATION NO.

EP 18 21 5212

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2019

| Patent document cited in search report | | | Publication date | Patent family member(s) | | | Publication date |
|---|---|---|---|---|---|---|---|
| EP | 3339938 | A1 | 27-06-2018 | EP | 3339938 | A1 | 27-06-2018 |
| | | | | JP | WO2017030207 | A1 | 26-07-2018 |
| | | | | US | 2018252850 | A1 | 06-09-2018 |
| | | | | WO | 2017030207 | A1 | 23-02-2017 |
| WO | 2009083977 | A2 | 09-07-2009 | NONE | | | |
| US | 2009190094 | A1 | 30-07-2009 | JP | 4893200 | B2 | 07-03-2012 |
| | | | | JP | 2008083539 | A | 10-04-2008 |
| | | | | US | 2009190094 | A1 | 30-07-2009 |
| | | | | WO | 2008038586 | A1 | 03-04-2008 |
| US | 2018231771 | A1 | 16-08-2018 | US | 2018231771 | A1 | 16-08-2018 |
| | | | | WO | 2018152337 | A1 | 23-08-2018 |

EPO FORM P0459

For more details about this annex : see Official Journal of the European Patent Office, No. 12/82

**EP 3 671 293 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017180403 A

- US 20160231568 A

### Non-patent literature cited in the description

- **A. BORISKIN ; V. DRAZIC ; R. KEATING ; M. DAMGHANIAN ; O. SHRAMKOVA ; L. BLONDE.** Near field focusing by edge diffraction''. *Optics Letters,* 2018, vol. 43 (16), 4053-4056

- **A. BORISKIN ; V. DRAZIC ; R. KEATING ; M. DAMGHANIAN ; O. SHRAMKOVA ; L. BLONDÉ.** Near field focusing by edge diffraction. *Optics Letters,* 2018, vol. 43 (16), 4053-4056